(19) Europäisches Patentamt
European Patent Office
Office européen des brevets

(11) Veröffentlichungsnummer : **0 040 171**
**B1**

(12) # EUROPÄISCHE PATENTSCHRIFT

(45) Veröffentlichungstag der Patentschrift : **21.03.84**

(51) Int. Cl.³ : **C 09 B 29/08**, C 09 B 31/043// D06P1/02, G03C5/52

(21) Anmeldenummer : **81810154.5**

(22) Anmeldetag : **24.04.81**

(54) **Azofarbstoffe, Verfahren zu ihrer Herstellung und Verwendung als Bildfarbstoffe in photographischen Silberfarbbleichmaterialien.**

(30) Priorität : **30.04.80 CH 3341/80**

(43) Veröffentlichungstag der Anmeldung : **18.11.81 Patentblatt 81/46**

(45) Bekanntmachung des Hinweises auf die Patenterteilung : **21.03.84 Patentblatt 84/12**

(84) Benannte Vertragsstaaten : **BE CH DE FR GB IT LI**

(56) Entgegenhaltungen : **US-A- 2 286 795**

(73) Patentinhaber : **CIBA-GEIGY AG**
**Postfach**
**CH-4002 Basel (CH)**

(72) Erfinder : **Lenoir, John, Dr.**
**Avenue Général Guisan 34**
**CH-1700 Fribourg (CH)**
Erfinder : **Jan, Gérald, Dr.**
**Rte. de la Poudrière 33**
**CH-1700 Fribourg (CH)**

**EP 0 040 171 B1**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

# Azofarbstoffe, Verfahren zu ihrer Herstellung und Verwendung als Bildfarbstoffe in photographischen Silberfarbbleichmaterialien

Die vorliegende Erfindung betrifft neue Azofarbstoffe, ein Verfahren zu deren Herstellung sowie die Verwendung dieser Verbindungen als Bildfarbstoffe in photographischen Silberfarbbleichmaterialien.

Aufgabe der vorliegenden Erfindung ist es, neue Azofarbstoffe für photographische Silberfarbbleichmaterialien bereitzustellen.

Es wurde gefunden, dass gewisse wasserunlösliche, öllösliche Azofarbstoffe, welche eine N-Phenylphosphoramidsäurediesterkomponente enthalten, zu besonders guten Resultaten bei ihrem Einsatz als Bildfarbstoffe in photographischen Silberfarbbleichmaterialien führen.

Azofarbstoffe, die eine Phosphoramidsäurediestergruppe enthalten, sind beispielsweise aus US-A-2 286 795 bekannt. Die darin offenbarten Farbstoffe zeichnen sich durch eine Mercaptogruppe in p-Stellung zur Phosphoramidsäurediestergruppe aus. Sie werden zum Färben textiler Materialien verwendet. Die erfindungsgemässen Farbstoffe der nachfolgenden Formel (1) enthalten keine solche Mercaptogruppe.

Gegenstand der vorliegenden Erfindung sind Azofarbstoffe der Formel

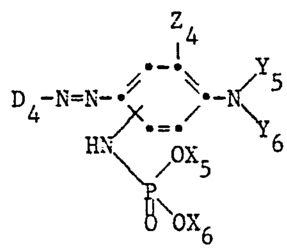

(1)

worin

$X_5$ und $X_6$ unabhängig voneinander gegebenenfalls mit Hydroxyl, Methoxy, Aethoxy, Cyano, Fluor, Chlor oder Brom substituiertes Alkyl mit 1 bis 12 Kohlenstoffatomen oder Phenyl oder Benzyl sind,

$Y_5$ Wasserstoff oder gegebenenfalls mit Alkoxy mit 1 bis 4 Kohlenstoffatomen substituiertes Alkyl mit 1 bis 5 Kohlenstoffatomen,

$Y_6$ Wasserstoff, gegebenenfalls mit Methoxy, Phenyl, Hydroxyl, Fluor Chlor, Brom, Carbalkoxy mit 2 bis 6 Kohlenstoffatomen oder Acyloxy mit 2 bis 7 Kohlenstoffatomen oder Cyano substituiertes Alkyl mit 1 bis 8 Kohlenstoffatomen oder mit Alkyl oder Alkoxy mit je 1 bis 5 Kohlenstoffatomen oder Chlor substituiertes Aryl ist oder zusammen mit $Y_5$ die zur Vervollständigung eines gegebenenfalls mit Carbalkoxy mit 2 bis 5 Kohlenstoffatomen substituierten, gesättigten 5-gliedrigen Ringes notwendigen Atome darstellt,

$Z_4$ Wasserstoff, Alkyl oder Alkoxy mit je 1 bis 4 Kohlenstoffatomen, gegebenenfalls mit Methoxy oder Aethoxy substituiertes Alkoxy mit 1 oder 2 Kohlenstoffatomen, Chlor, Brom oder Cyano, Carbalkoxy mit 2 bis 5 Kohlenstoffatomen oder diejenigen Atome bedeutet, um zusammen mit $Y_5$ einen methylsubstituierten, gegebenenfalls ein Sauerstoffatom als weiteres Heteroatom enthaltenden, gesättigten 6-gliedrigen Ring zu bilden,

$D_4$ gegebenenfalls mit Chlor oder Phenyl substituiertes Thiadiazolyl, gegebenenfalls mit Cyano substituiertes Imidazolyl, wobei mindestens eines der Stickstoffatome gegebenenfalls mit $-C_2H_4OC_6H_5$ substituiert ist ; gegebenenfalls mit Nitrogruppen substituiertes Benzthiazolyl oder Benzisothiazolyl, oder gegebenenfalls mit Methyl- und/oder Carbäthoxygruppen substituiertes Thienyl oder gegebenenfalls mit Alkyl oder Alkoxy mit je 1 bis 4 Kohlenstoffatomen, Cycloalkyl mit 5 oder 6 Kohlenstoffatomen, Phenyl, Halogen, Trifluormethyl, Cyano, Nitro, (Carbonsäure-) Acyl, Acetyl, Benzoyl, Carbalkoxy mit 2 bis 5 Kohlenstoffatomen, Carbalkoxyäthoxy mit 1 bis 4 Kohlenstoffatomen im Alkoxyteil, Alkylsulfon mit 1 bis 5 Kohlenstoffatomen, Phenylsulfon, N-alkyl- oder N,N-dialkylsubstituiertes Sulfonamido mit je 1 bis 4 Kohlenstoffatomen im Alkylteil, wobei der Alkylteil gegebenenfalls mit Methoxy substituiert ist, oder gegebenenfalls mit Cyano und/oder Carbäthoxy substituiertes Alkenyl mit 2 bis 4 Kohlenstoffatomen substituiertes Phenyl ist.

Ein weiterer Gegenstand der Erfindung betrifft ein Verfahren zur Herstellung der erfindungsgemässen Azofarbstoffe. Durch dieses Verfahren wird das Produkt der Formel (1) in hoher Ausbeute und Reinheit zugänglich.

Gegenstand der Erfindung sind ferner die Verwendung der erfindungsgemässen Azofarbstoffe als Bildfarbstoffe in photographischen Silberfarbbleichmaterialien, das diese Farbstoffe enthaltende photographische Material, seine Herstellung, seine Verwendung zur Herstellung photographischer Bilder sowie die damit hergestellten Bilder.

Die Substituenten $X_5$ und $X_6$, welche Bestandteil der Estergruppierung sind, können unabhängig voneinander Alkyl mit 1 bis 12 Kohlenstoffatomen sein, wobei die Alkylreste geradkettig oder verzweigt sein können, wie z. B. Methyl, Aethyl, Propyl, i-Propyl, Butyl, i-Butyl, tert. Butyl, Amyl, tert.-Amyl (1,1-Dimethylpropyl), 1,1,3,3-Tetramethylbutyl, 1-Methyläthylpentyl, Hexyl, 1-Methylpentyl, Neopentyl, 1-, 2- oder 3-Methylhexyl, Heptyl, n-Octyl, tert. Octyl- 2-Aethylhexyl, n-Nonyl, Isononyl, tert. Nonyl, Decyl, tert. Decyl, Undecyl und Dodecyl, sowie die dazugehörenden Isomeren.

Die Alkylreste können substituiert sein mit Hydroxyl, Methoxy, Aethoxy, Cyano, Fluor, Chlor oder Brom.

Weiter können $X_5$ und $X_6$ Benzyl und Phenyl bedeuten.

Für den Substituenten $Y_5$ kommen Wasserstoff oder Alkyl mit 1 bis 5 Kohlenstoffatomen, in Frage. Die Alkylreste können sowohl geradkettig als auch verzweigt sein. Sie können z. B. Methyl, Aethyl, Propyl, i-Propyl, Butyl, i-Butyl, tert. Butyl, Amyl oder tert. Amyl (1,1-Dimethylpropyl) darstellen. Geeigneter Substituent für diese Reste ist Alkoxy mit 1 bis 4 Kohlenstoffatomen, insbesondere Methoxy und Aethoxy.

Der zu $Y_5$ in geminaler Position stehende Substituent $Y_6$ bedeutet Wasserstoff, Alkyl mit 1 bis 8 Kohlenstoffatomen. Die Alkylreste $Y_6$ können die gleichen sein wie sie bereits für $Y_5$ angegeben sind. Zusätzlich sind auch Hexyl, 1-Methylpentyl oder Neopentyl möglich, sowie 1-, 2- oder 3-Methylhexyl, Heptyl, n-Octyl, tert.-Octyl oder 2-Aethylhexyl.

Alkylsubstituenten sind z. B. Hydroxyl, Methoxy, Phenyl, Halogen wie Fluor, Chlor oder Brom, Cyano oder Carbalkoxy mit 1 bis 6 Kohlenstoffatomen. Ferner können als Alkylsubstituenten Acyloxygruppen wie z. B.

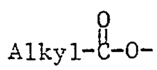 oder 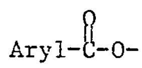

infrage kommen. Die Alkylreste in dieser Acyloxygruppe enthalten 1 bis 6, vorzugsweise 1 oder 2 Kohlenstoffatome. Bevorzugter Arylrest ist Phenyl.

$Y_6$ ist ferner Aryl, das gegebenenfalls mit Alkyl oder Alkoxy mit je 1 bis 5 Kohlenstoffatomen oder Chlor substituiert ist. Vorzugsweise ist $Y_6$ Phenyl.

Beide Substituenten $Y_5$ und $Y_6$ können zusammen mit dem Stickstoffatom, an das sie gebunden sind, 5-gliedrige Ringe bilden, wie z. B. Pyrrolidinringe. Substituent an diesen Ringen ist z. B. Carbalkoxy mit 2 bis 5 Kohlenstoffatomen, insbesondere mit 2 oder 3 Kohlenstoffatomen.

Der Substituent $Z_4$ ist Alkyl oder Alkoxy mit 1 bis 4 Kohlenstoffatomen. Die Alkylreste sind dieselben wie sie bereits für $Y_5$ angegeben sind. Als Alkoxyreste kommen die den genannten Alkylresten analogen Reste in Frage. Diese können in beiden Fällen mit Methoxy oder Aethoxy substituiert sein. Weiter kommen für $Z_1$ Halogen, vorzugsweise Chlor oder Brom, ferner Cyano oder Carbalkoxy mit 2 bis 5 Kohlenstoffatomen in Frage.

$Z_4$ stellt aber auch diejenigen Atome dar, um zusammen mit $Y_5$ einen Ring zu bilden. Insbesondere 6-gliedrige Ringe sind bevorzugt. Sie können gegebenenfalls ein Sauerstoffatom als weiteres Heteroatom enthalten. Substituent an diesen Ringen kann Methyl sein.

Der Substituent $D_4$ z. B. 1,2,4-Thiadiazolyl, 1,3,4-Thiadiazolyl, Thienyl, Benzthiazolyl, Benzisothiazolyl, oder Imidazolyl bedeuten. Jedes dieser Systeme kann an einem oder mehreren seiner Kohlenstoffatome sowie an einem oder mehrerer seiner Stickstoffatome die in Anspruch 1 genannten Substituenten tragen. Ferner bedeutet $D_4$ Phenyl. Als Substituenten dafür kommen in Frage : Alkyl oder Alkoxy mit je 1 bis 4 Kohlenstoffatomen, wie z. B. $-C_2H_4OC_6H_5$, Cycloalkyl mit 5 oder 6 Kohlenstoffatomen, Phenyl, Halogen, besonders Chlor oder Brom, Trifluormethyl, Cyano, Nitro, (Carbonsäure-) Acyl, Acetyl, Benzoyl, Carbalkoxy mit 2 bis 5 Kohlenstoffatomen, besonders Carbmethoxy oder Carbäthoxy, Carbalkoxyäthoxy mit 1 bis 4 Kohlenstoffatomen im Alkoxyteil, Alkylsulfon mit 1 bis 5 Kohlenstoffatomen, Phenylsulfon, N-alkyl-oder N,N-dialkylsubstituiertes Sulfonamido mit je 1 bis 4 Kohlenstoffatomen im Alkylteil, wobei der Alkylteil gegebenenfalls mit Methoxy substituiert ist, oder gegebenenfalls mit Cyano und/oder Carbäthoxy substituiertes Alkenyl mit 2 bis 4 Kohlenstoffatomen, vorzugsweise Vinyl.

Die bevorzugte Bedeutung von $D_4$ ist Phenyl, welches maximal mit 4, gegebenenfalls verschiedenen Substituenten aus der oben genannten Aufzählung substituiert ist. Von den aufgezählten Substituenten sind elektronegative bevorzugt. Diese können Cyano, Nitro, Chlor, Trifluormethyl, Brom, Acetyl, Benzoyl, Carbmethoxy, Carbäthoxy, Methoxy, Aethoxy oder mit Cyano und/oder Carbäthoxy substituiertes Vinyl sein oder auch Methyl oder Aethyl. Die elektronegativen Substituenten besetzen vorzugsweise ortho- und para-Stellungen im Phenylring.

Bevorzugt sind nun solche Azofarbstoffe, die der Formel

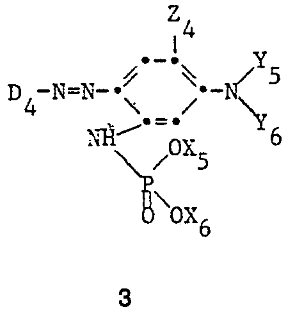 (2)

entsprechen, worin $X_5$, $X_6$, $Y_5$, $Y_6$, $Z_4$ und $D_4$ die oben genannten Bedeutungen haben.

Bevorzugte Verbindungen der Formel (2) sind die Verbindungen der Formel

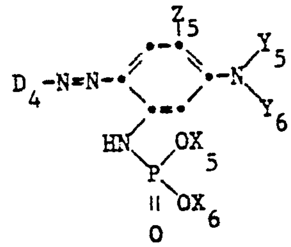

(3)

worin

$Z_5$ Wasserstoff, Alkyl oder Alkoxy mit je 1 bis 4 Kohlenstoffatomen, $—OC_2H_4OCH_3$ oder diejenigen Atome bedeutet, um zusammen mit $Y_5$ einen gegebenenfalls ein Sauerstoffatom als weiteres Heteroatom enthaltenden, gesättigten 6-gliedrigen Ring zu bilden, und

$X_5$, $X_6$, $Y_5$, $Y_6$ und $D_4$ die oben angegebene Bedeutung haben.

Besonders geeignete Verbindungen entsprechen der Formel

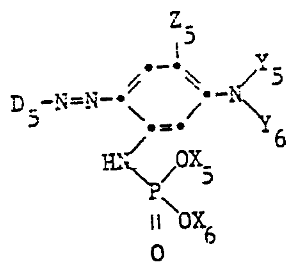

(4)

worin

$D_5$ gegebenenfalls mit Alkyl oder Alkoxy mit je 1 bis 4 Kohlenstoffatomen, Cycloalkyl mit 5 oder 6 Kohlenstoffatomen, Phenyl, Halogen, Trifluormethyl, Cyano, Nitro, (Carbonsäure-) Acyl, Acetyl, Benzoyl, Carbalkoxy mit 2 bis 5 Kohlenstoffatomen, Carbalkoxyäthoxy mit 1 bis 4 Kohlenstoffatomen im Alkoxyteil, Alkylsulfon mit 1 bis 5 Kohlenstoffatomen, Phenylsulfon, N-alkyl- oder N,N-dialkylsubstituiertes Sulfonamido mit je 1 bis 4 Kohlenstoffatomen im Alkylteil, wobei der Alkylteil gegebenenfalls mit Methoxy substituiert ist, oder gegebenenfalls mit Cyano und/oder Carbäthoxy substituiertes Alkenyl mit 2 bis 4 Kohlenstoffatomen substituiertes Phenyl ist und $X_5$, $X_6$, $Y_5$, $Y_6$ und $Z_5$ die oben angegebene Bedeutung haben.

Ferner eignen sich Verbindungen der Formel

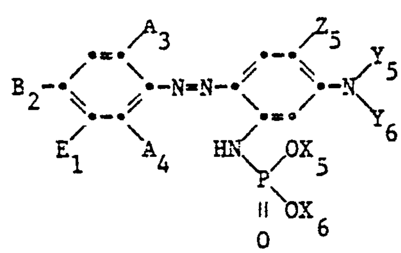

(5)

worin

$A_3$ und $A_4$ unabhängig voneinander Wasserstoff, Alkyl mit 1 bis 4 Kohlenstoffatomen, Carbalkoxy mit 2 bis 5 Kohlenstoffatomen, Carbalkoxyäthoxy mit 1 bis 4 Kohlenstoffatomen im Alkoxyteil, Trifluormethyl, Cyano, Nitro, Alkylsulfon mit 1 bis 5 Kohlenstoffatomen oder Halogen sind, $B_2$ Wasserstoff gegebenenfalls mit elektronegativen Gruppen substituiertes Alkyl mit 1 bis 4 Kohlenstoffatomen, Alkoxy mit 1 oder 2 Kohlenstoffatomen, gegebenenfalls mit elektronegativen Gruppen substituiertes Alkenyl mit 2 bis 4 Kohlenstoffatomen, $T_2—CO—$, worin $T_2$ Methyl oder Phenyl ist, Carbalkoxy mit 2 bis 5 Kohlenstoffatomen, Alkylsulfon mit 1 bis 6 Kohlenstoffatomen, Phenylsulfon, N-alkyl- oder N,N-dialkylsubstituiertes Sulfonamid mit je 1 oder 2 Kohlenstoffatomen im Alkylteil, wobei der Alkylteil gegebenenfalls mit Methoxy substituiert ist, Cyano, Nitro oder Halogen ist, $E_1$ Wasserstoff, Alkyl mit 1 bis 4 Kohlenstoffatomen, eine

elektronegative Gruppe oder diejenigen Atome darstellt, um zusammen mit $B_2$ einen gesättigten 5- oder 6-gliedrigen Ring oder ein cyclisches Imid zu bilden, worin das Stickstoffatom gegebenenfalls mit Alkoxyalkyl substituiert ist, worin der Alkoxy- und Alkylteil je 1 bis 4 Kohlenstoffatome enthalten, und $X_5$, $X_6$, $Y_5$, $Y_6$ und $Z_5$ die oben angegebene Bedeutung haben.

Besonders geeignet sind die Verbindungen der Formel

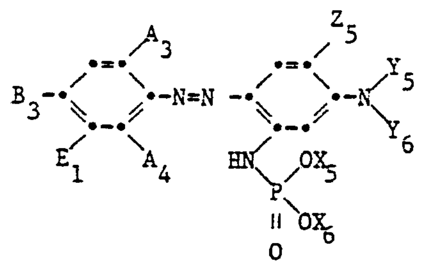

(6)

worin

$B_3$ Wasserstoff, gegebenenfalls mit Cyano und/oder Carbäthoxy substituiertes Alkyl mit 1 bis 4 Kohlenstoffatomen, gegebenenfalls mit Cyano und/oder Carbäthoxy substituiertes Alkenyl mit 2 bis 4 Kohlenstoffatomen, Acetyl, Benzoyl, Cyano, Nitro, Halogen, Alkylsulfon mit 1 bis 6 Kohlenstoffatomen oder N-alkyl- oder N,N-dialkylsubstituiertes Sulfonamid mit je 1 oder 2 Kohlenstoffatomen im Alkylteil ist und

$X_5$, $X_6$, $Y_5$, $Y_6$, $Z_5$, $A_3$, $A_4$ und $E_1$ die oben angegebene Bedeutung haben.

Die Herstellung der Verbindungen der Formel (1), worin $X_5$, $X_6$, $Y_5$, $Y_6$, $Z_4$ und $D_4$ die oben angegebene Bedeutung besitzen, erfolgt durch Kupplung einer Verbindung der Formel

$$D_4—N_2^{\oplus}X^{\ominus} \qquad (7)$$

worin $D_4$ die oben angegebene Bedeutung hat und $X^{\ominus}$ ein Anion ist, mit einem N-Phenylphosphoramidsäurediester der Formel

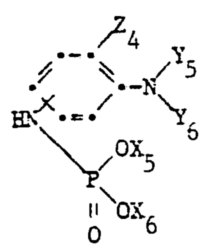

(8)

worin $X_5$, $X_6$, $Y_6$, $Y_5$ und $Z_4$ die oben angegebene Bedeutung besitzen, in saurem bis neutralem Medium.

N-Phenylphosphoramidsäurediester der Formel (8) werden hergestellt, indem man ein Amin der Formel

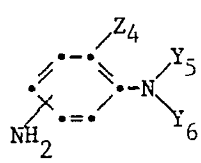

(9)

worin $Y_5$, $Y_6$ und $Z_4$ die oben angegebene Bedeutung haben, mit einem Phosphorsäureesterchlorid der Formel

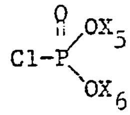

(10)

in Gegenwart einer Base, oder mit einem Phosphit der Formel

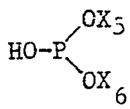

(11)

worin $X_5$ und $X_6$ die oben angegebene Bedeutung haben, in Gegenwart einer Base und Tetrachlorkohlenstoff umsetzt. Die letztere Herstellungsmethode ist die bevorzugte.

Als Phosphite der Formel (11) können z. B. verwendet werden : dimethylphosphit, Diäthylphosphit, Diisopropylphosphit, Dibutylphosphit, Phenyldodecylphosphit, Phenylneopentylphosphit, Diäthylphosphit, Bis 2-Aethyl-hexyl-phosphit, Diphenylphosphit, 2-Aethylhexylnonylphenylphosphit, Aethyl-isopropylphosphit, 2,2'-Dichloräthylphosphit, Bis (2-isopropyl-S-methylphenyl) phosphit, Aethyl-2-isopropyl-5-methylphenylphosphit, Dibenzylphosphit oder Aethylmethylphosphit.

Als Chloride der Formel (10) können z. B. verwendet werden : Phosphorsäure-diäthylesterchlorid, Phosphorsäure-dimethylesterchlorid, Phosphorsäure-dipropylesterchlorid, Phosphorfluorsäure-bis (2,2,2-trifluoräthyl)-esterchlorid.

Beispiele für N-Phenylphosphoramidsäurediester der Formel (7) sind :

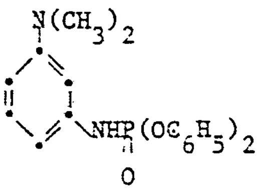
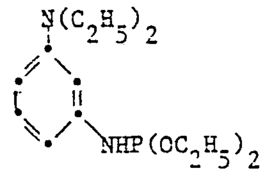
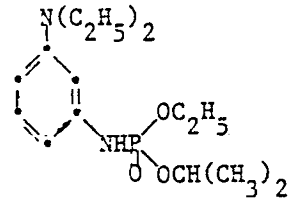

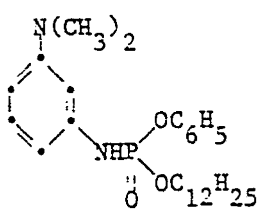
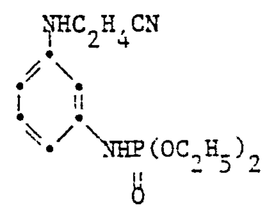
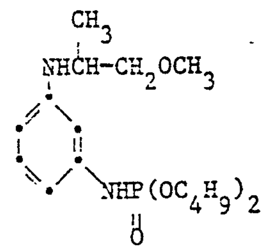

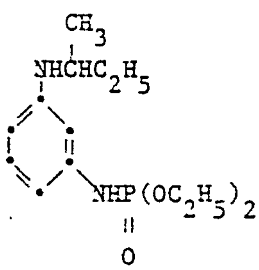
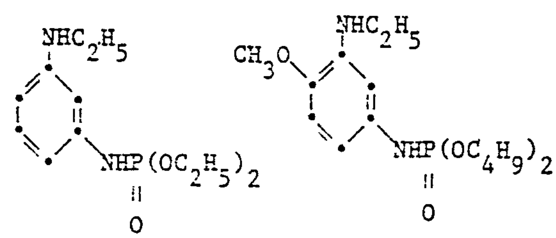

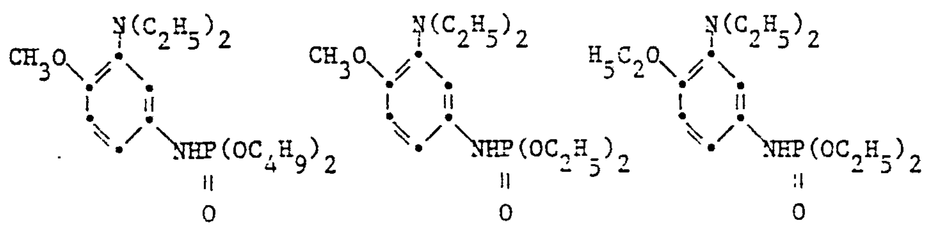

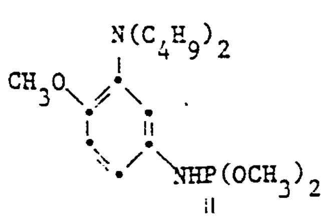
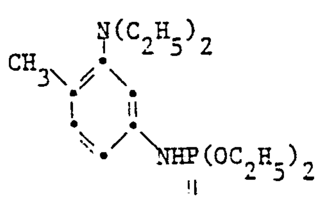
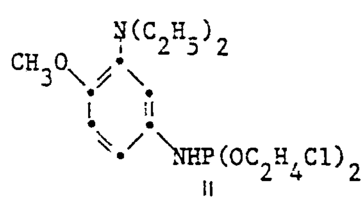

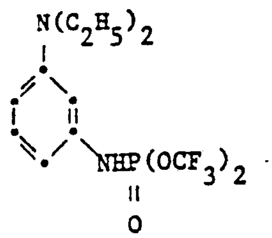 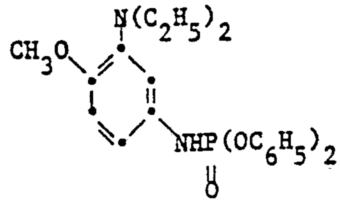 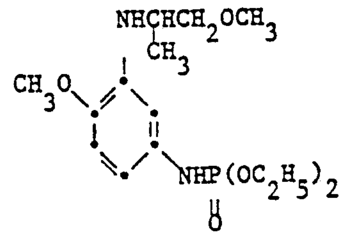

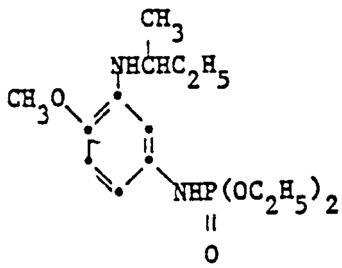 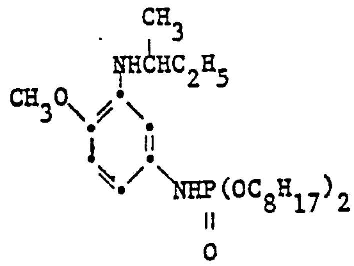 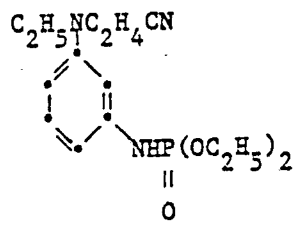

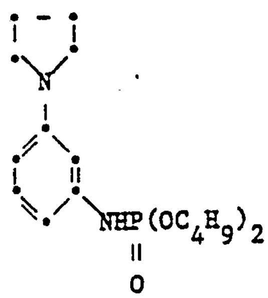 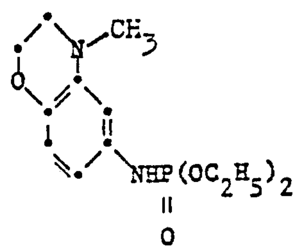 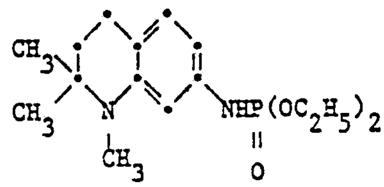

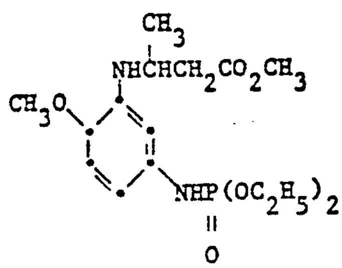 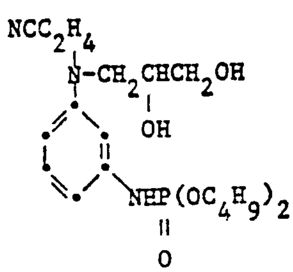 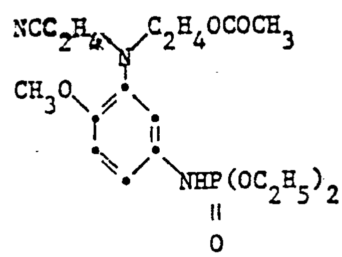

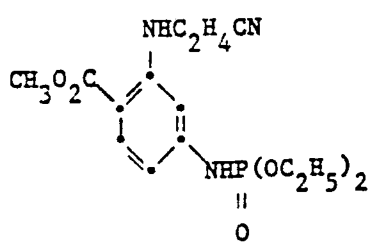 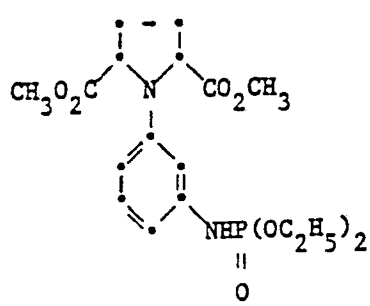

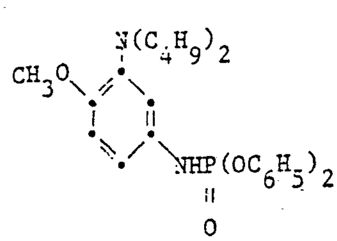 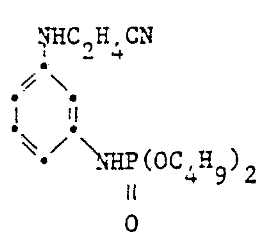

Die Reste $D_4$ der Formel (7) stammen vorwiegend aus der Benzol- oder heterocyclischen Reihe, z. B. der Thiophen-, Thiadiazol-, Benzthiazol-, Benzisothiazol-, oder/midazol-Reihe. Im einzelnen seien beispielsweise folgende Reste, die der allgemeinen Formel $D_4$-$NH_2$ entsprechen, genannt :

Anilin, o-, m- oder p-Toluidin, o-, m- oder p-Methylsulfonyl-anilin, p-Aminophenyl-hexylsulfid, o-, m- oder p-Nitroanilin, o-, m- oder p-Cyananilin-, o-, m- oder p-Chloranilin, o-, m- oder p-Brom-anilin, o-, m- oder p-Trifluormethylanilin, 2,4- oder 2,6-Dibromanilin 2,6-Dibrom-4-chloranilin, 4-Amino-3,5-dibromtoluol, 2,6-Dibrom-4-äthylanilin, 3-[4'-Amino-3',5'-dibromphenyl-]-2-cyanacrylsäure-äthyl-butyl- oder t-butylester, 3-[4'-Amino-3',5'-dibromphenyl]-2-cyanacrylnitril, 4-Amino-3,5-dibromphenylacrylsäure-äthylester, 3,4-Dichloranilin, 2,5-Dichloranilin, 3,5-Dichloranilin, 2,4,5-Trichloranilin, 2,4,6-Trichloranilin, 2,4, 6-Tribromanilin, 2,4-Dicyananilin, 2,5-Dicyananilin, 2,6-Dicyananilin, 2-Cyan-4-chloranilin, 2-Cyan-4-chlor-6-bromanilin, 2,4-Dicyan-6-chloranilin, 2-Chlor-4-cyananilin, 2-Trifluormethyl-4-chloroanilin, 2-Nitro-4-chloranilin, 2-Nitro-4-methylanilin, 2-Methyl-4-nitroanilin, 2-Chlor-4-nitroanilin, 2-Brom-4-nitroanilin, 2-Trifluormethyl-4-nitroanilin, 2-Trifluormethyl-4-nitro-6-bromanilin, 2-Trifluormethyl-4-nitro-6-cyananilin, 2,5-Dichlor-4-nitroanilin, 2,6-Dichlor-4-nitro-anilin, 4-Amino-3,5-dibrombenzolsulfonsäure, 4-Amino-3,5-dibromphenyl-hexylsulfon, 4-Amino-3,5-dibrombenzaldehyd, 4-Amino-3,5-dibromacetophenon, 4-Aminozimtsäureäthylester, 4-Amino-hydrozimtsäureäthyl- oder methylester, 4-Amino-3,5-dibrom-zimtsäure-äthyl-, methyl- oder 2-methyl-pentylester, 2,6-Dibrom-4-methoxyanilin, 2,6-Dicyano-3,4-dimethylanilin, 2, 4-Dicyano-3,6-dimethylanilin, 2,6-Dibrom-4-nitroanilin, 2-Chlor-4-nitro-6-bromanilin, 2,6-Dichlor-4-cyan-anilin, 2,4-Dinitroanilin, 2,4-Dinitro-6-chloranilin, 2,4-Dinitro-6-bromanilin, 2,4-Dinitro-6-cyan-anilin, 2,6-Dicyan-4-nitroanilin, 2-Methylsulfonyl-4-chloranilin, 2-Chlor-4-methylsulfonylanilin, 2-Methylsulfonyl-4-nitroanilin, 2-Nitro-4-äthylsulfonylanilin, 2,4-Dinitro-6-methylsulfonylanilin, 2-Cyan-4-methylsulfonylanilin, 2-Phenylsulfonylanilin, 2,6-Dichlor-4-methylsulfonyl-anilin, 2,6-Dibrom-4-methylsulfonylanilin, o-, m- oder p-Aminobenzoesäure-methylester, -äthylester, -propylester, -butylester, -benzylester, -phenylester, -β-methoxyäthylester, -β-äthoxyäthylester, -β-hydroxyäthylester, 3,6-dioxaheptylester, o-aminophenylphosphonsäure diäthylester, 4-Nitroanthranilsäure-methylester, -methoxyäthylester, 3- oder 4-Aminophthalsäure, 5-Aminoisophthalsäure- oder Aminoterephthalsäuredimethylester, -diäthylester, 3- oder 4-Aminobenzoesäure-amid, -methylamid, -n-butylamid, 3'-methoxypropylamid, 2-, 3- oder 4-Aminobenzoesäure-dimethylamid, -diäthylamid, -pyrrolidid, -morpholid, -N-äthyl-N-β-methoxyäthylamid, 5-Amino-isophthalsäurediamid, -dimethoxypropylamid, Aminoterephthalsäure-bis-diäthylamid, 3- oder 4-Aminophthalsäureamid, -β-hydroxyäthylimid, -phenylimid, 3-Amino-6-nitrophthalsäure-β-hydroxyäthylimid, 2-, 3- oder 4-Aminobenzolsulfonsäure-N,N-bis-3'-methoxyäthylamid, -morpholid, -N-methylanilid, 1-Amino-2-chlorbenzol-4-sulfonsäuredimethylamid, 1-Amino-2,5- oder 2,6-dichlorbenzol-4-sulfonsäuredimethylamid, Methylsulfonsäure-2'-, 3'-oder 4'-amino-phenylester, Benzolsulfonsäure-2'-, 3'- oder 4'-aminophenylester, N-Acetyl-p-phenylendiamin, 2- oder 4-Aminobenzophenon, 4-Nitro-1-naphthylamin, 6-Nitro-2-naphthylamin, 1-Aminoanthrachinon, 1-Amino-4-chloranthrachinon, 1-Amino-2-äthoxynaphthalin, 4-Amino-naphthalsäurebutylimid, 6-Amino-5,7-dicyanindan, 4-Aminoazobenzol, 2',3-Dimethyl-4-aminoazobenzol, 3'-, 2-Dimethyl-4-amino-azobenzol, 2-Methyl-5-methoxy-4-aminobenzol, 4-Amino-2-nitroazobenzol, 2,5-Dimethoxy-4-aminoazobenzol, 4'-Hydroxy-4-aminoazobenzol, 4'-Chlor-4-aminoazobenzol, 2,3'-Dichloraminoazobenzol, 3,5-Dibrom-4-amino-azobenzol, 4-Aminoazobenzol-4'-sulfonsäuredimethylamid, 2'- oder 3'-Chlor-4-aminoazobenzol, Benzolazo-4-aminonaphthalin, 3-Amino-2,1-benzisothiazol, 3-Amino-5-chlor-2,1-benzisothiazol, 3-Amino-5-brom-2,1-benzisothiazol, 3-Amino-5-nitro-2,1-benzisothiazol, 3-Amino-5-nitro-7-chlor-2,1-benzisothiazol, 3-Amino-5-nitro-7-brom-2,1-benzisothiazol, 3-Amino-5,7-dichlor-benzisothiazol, 3-Amino-5,7-dibrom-benzisothiazol, 4-Amino-7-nitro-1,2-benzisothiazol, 4-Amino-5-chlor-7-nitro-1,2-benzisothiazol, 4-Amino-5-brom-7-nitro-1,2-benzisothiazol, 4-Amino-5-cyan-7-nitro-1,2-benzisothiazol, 3-Amino-2,1-benzisothiazol-5-sulfonsäure-N,N-bis-β-methoxyäthylamid, 2-Amino-5-phenyl-1,3,4-thiadiazol, 2-Amino-5-äthylmercapto-1,3,4-thiadiazol, 3-Phenyl-5-amino-1,2,4-thiadiazol, 3-Chlor-5-amino-1,2,4-thiadiazol, 3-β-Carbomethoxyäthyl-mercapto-5-amino-1,2,4-thiadiazol, 3-Methylmercapto-5-amino-1,2,4-thiadiazol, 1-Aethyl-2-amino-4,5-dicyano-imidazol, 2-Aminobenzthiazol, 2-Amino-6-methylbenzthiazol, 2-Amino-6-(methoxy-, äthoxy- oder butoxy)-benzthiazol, 2-Amino-6-cyanbenzthiazol, 2-Amino-6-thiocyanato-benzthiazol, 2-Amino-6-nitrobenzthiazol, 2-Amino-5,6-dichlorbenzthiazol, 2-Amino-6,7-dichlorbenzthiazol, 2-Amino-(4 oder 6)-methylsulfonylbenzthiazol, 2-Amino-3-nitro-5-methylsulfonylthiophen, 2-Amino-3,5-bis-(methylsulfonyl)-thiophen, 2-Amino-3,5-dinitrothiophen, 2-Amino-3-cyan-5-nitro-thiophen, 2-Amino-5-nitrothiophen, 2-Aminothiophen-3,4,5-tricarbonsäure triäthylester, 2-Amino-3-cyanothiophen-4,5-dicarbonsäure diäthylester, o-, m- oder p-Aminobenzolsulfonsäure, 4-Amino-3,5-dibrom-benzosulfonsäure-2',4'-di-ter.-pentylphenylester, 2-Amino-4- oder 5-nitrobenzolsulfonsäure, 2-Amino-5-acetamidobenzolsulfonsäure, 2-Amino-4-benzoylamidobenzolsulfonsäure, 4-Aminophenylmethansulfonsäure, 2- oder 4-Aminophenylmethylphosphonsäure, 3-Amino-naphthalin-1,5-disulfonsäure und 1-Amino-anthrachinon-2-sulfonsäure.

Die erfindungsgemässen Azofarbstoffe eignen sich in besonders vorteilhafter Weise als Bildfarbstoffe für das Silberfarbbleichverfahren. Demgemäss lassen sich in üblicher, an sich bekannter Weise wertvolle photographische Materialien, insbesondere Silberfarbbleichmaterialien, herstellen, die auf einem Schichtträger mindestens eine Schicht mit einem Farbstoff der Formel (1) enthalten.

Als Träger für die Silberhalogenidemulsionsschichten kann ein transparentes, metallisch-reflektierendes oder vorzugsweise weiss-opakes Material verwendet werden, das keine Flüssigkeit aus den Bädern aufzusaugen vermag.

Der Träger kann beispielsweise aus gegebenenfalls pigmentierten Cellulosetriacetat oder Polyester bestehen. Wenn er aus Papierfilz besteht, muss dieser beidseitig lackiert oder mit Polyäthylen beschichtet sein. Auf mindestens einer Seite dieses Trägers befinden sich die lichtempfindlichen Schichten, vorzugsweise in der bekannten Anordnung, d. h. zu unterst eine rot sensibilisierte Silberhalogenidemulsionsschicht, die einen blaugrünen Azofarbstoff enthält, darüber eine grün sensibilisierte Silberhalogenidemulsionsschicht, die einen purpurfarbenen Azofarbstoff enthält und zu oberst eine blauempfindliche Silberhalogenidemulsionsschicht, die einen gelben Azofarbstoff enthält. Das Material kann auch Unterschichten, Zwischenschichten, Filterschichten und Schutzschichten enthalten, doch soll die gesamte Dicke der Schichten in der Regel 20 µm nicht übersteigen.

Die erfindungsgemässen Farbstoffe sind lipophil und werden im allgemeinen als Lösungen in hochsiedenden Lösungsmitteln in die Gelatine eingearbeitet. In den meisten Fällen genügt es die zu verwendenden Farbstoffe als Lösung in einem solchen Lösungsmittel, eventuell unter Zuhilfenahme eines leicht flüchtigen Hilfslösungsmittels bei normaler oder leicht erhöhter Temperatur zu einer wässerigen Gelatinelösung unter gutem Rühren zuzusetzen. Anschliessend wird die Mischung mit einer Silberhalogenid und/oder andere Materialien zur Erzeugung photographischer Bilder enthaltenden Gelatine zusammengebracht, auf einer Unterlage in üblicher Weise zu einer Schicht gegossen und gegebenenfalls getrocknet.

Farbstoffe der Formel (1) in organischen Lösungsmitteln gelöst, können direkt zu einer Silberhalogenid und/oder andere Materialien zur Erzeugung photographischer Bilder enthaltenden Gelatine zugegeben werden. So ist es z. B. möglich, die Farbstofflösung erst unmittelbar vor dem Giessen zuzudosieren.

Anstelle des einfachen Rührens können auch die üblichen Verteilungsmethoden mittels Knet- und/oder Scherkräften oder Ultraschall zur Anwendung gelangen.

Es ist auch möglich, den Farbstoff nicht als Lösung, sondern in fester Form als feine Suspension zuzugeben.

Es ist des weiteren möglich, die Farbstoffe in Gegenwart von hochmolekularen Polymeren in die Gelatine einzuarbeiten. Von besonderem Interesse sind für diese Anwendung Latices.

Die Giesslösung kann noch weitere Zusätze wie Härtungsmittel, Sequestrierungsmittel une Netzmittel sowie Sensibilisatoren und Stabilisatoren für das Silberhalogenid enthalten.

Die Farbstoffe gehen keine chemischen Reaktionen mit den lichtempfindlichen Materialien ein. Die Farbstoffe der Formel (1) sind sehr diffusionsfest, weil sie stabile, organische Lösungen bilden. Sie sind gegen Calciumionen unempfindlich und gut auf Weiss bleichbar.

Die Farbstoffe erzeugen bei der Zugabe zu den Giesslösungen weder einen Viskositätsanstieg noch eine wesentliche Viskositätsänderung beim Stehenlassen des Giessgemisches.

Die spektralen Absorptionen in Gelatine liegen so, dass die Farbstoffe der Formel (1) je nach Struktur zu einem Farbstofftripel, zusammengestellt aus je einem Gelb-, Purpur- oder Blaugrünfarbstoff, kombiniert werden können, das über dem ganzen Dichtebereich für das Auge neutral erscheinende Grautöne aufweist.

Das die Farbstoffe der Formel (1) enthaltende photographische Silberfarbbleichmaterial zeichnet sich insbesondere durch brillante Farben, gute Farbwiedergabe und ausgezeichnete Lichtechtheit aus. Ein wichtiges Merkmal eines guten Farbkopiermaterials ist eine optimale Tonreproduktion und in allen Dichtebereichen ausgeglichene Farbgradationen. Besonders die Kontrolle des Farbgleichgewichtes bereitet immer wieder Schwierigkeiten, da unterschiedliches Bleichverhalten der Azofarbstoffe nicht immer mit den herkömmlichen Methoden des Materialaufbaues, wie Empfindlichkeit und Kontrast der eingesetzten Silberemulsionen ausgeglichen werden kann. Dadurch wird vielfach die Auswahl der Bildfarbstoffe, sowie insbesondere auch diejenige der Verarbeitungskomponenten im Bleichbad eingeschränkt.

Die Verarbeitung dèr belichteten Silberfarbbleichmaterialien erfolgt im allgemeinen in vier aufeinanderfolgenden Schritten :

1. Silberentwicklung
2. Farbbleichung
3. Silberbleichung
4. Fixierung.

Im ersten Schritt wird das bei der Belichtung entstehende latente Silberbild entwickelt. Im zweiten Schritt wird, entsprechend der vorliegenden bildmässigen Verteilung des Silbers, der dem Silber zugeordnete Bildfarbstoff ausgebleicht. Der dritte Schritt ist notwendig, um das nach der Farbbleichung noch vorhandene überschüssige Bildsilber zu reoxidieren. Im vierten Schritt wird das nunmehr gänzlich in Form von Halogeniden vorliegende Silber durch Herauslösen mit einem Komplexbildner, insbesondere einem Salz der Thioschwefelsäure, entfernt, um das fertige Bild gegenüber weiterer Belichtung unempfindlich zu machen, und das reine Farbbild von Trübung zu befreien.

Der zweite Verfahrensschritt, die Farbbleichung, erfolgt bei den üblichen bekannten Verfahren in stark saurem Medium, wobei zur Beschleunigung der Farbbleichung ein Katalysator zugesetzt wird. Die

Bleichbäder enthalten zudem einen Silberkomplexbildner oder -liganden. Beide Bestandteile, Katalysator und Ligand, sind notwendig, um die reduzierende Wirkung des metallischen, nicht-diffundierbaren Bildsilbers auf den ebenfalls nicht diffundierbaren Farbstoff zu übertragen. Die durch Reduktion am Bildsilber entstehende reduzierte Form des Katalysators dient dabei als Zwischenträger, welcher, nach Zurücklegung einer gewissen Diffusionsstrecke, den Farbstoff irreversibel reduziert und damit bleicht, und dabei selbst zur ursprünglichen Form reoxidiert wird.

Die Eigenschaft der reduzierten Stufe des Bleichkatalysators, zwischen Bildsilber und zu bleichendem Farbstoff frei zu diffundieren, ermöglicht es, Silber und Bildfarbstoff in einem gewissen Mass räumlich zu trennen, d. h. also den bleichbaren Farbstoff und die ihm zugeordnete Silberhalogenidemulsion nicht oder nur teilweise in der gleichen Schicht sondern in benachbarten Schichten anzuordnen. Solche Silberfarbbleichmaterialien sind z. B. in DE-A-2 036 918, 2 132 835 und 2 132 836 beschrieben.

Eine Vereinfachung des Verarbeitungsprozesses, bei der die Farbstoffbleichung und die Silberbleichung zu einem einzigen Verfahrensschritt zusammengefasst werden, ist in DE-A-2 448 433 beschrieben worden.

Die kombinierten Farb- und Silberbleichbäder (Zubereitungen) für die Verarbeitung des belichteten Silberfarbbleichmaterials enthalten die Komponenten (a) bis (e) und gegebenenfalls (f) : (a) starke Säure, (b) wasserlösliches Jodid, (c) wasserlösliches Oxidationsmittel, (d) Oxidationsschutzmittel, (e) Bleichkatalysatoren, (f) Bleichbeschleuniger.

Die Menge der Bleichkatalysatoren, die in den vorzugsweise wässrigen Behandlungsbädern eingesetzt wird, kann in weiten Grenzen schwanken und beträgt etwa 0,05 bis 10 g/l Bleichbad.

Die Temperatur des Bleichbades liegt im allgemeinen zwischen 20 und 90 °C, vorzugsweise zwischen 20 und 60 °C, wobei natürlich bei höhere Temperatur die erforderliche Bearbeitungsdauer kürzer ist als bei tieferer Temperatur. Die Bleichbäder sind innerhalb des angegebenen Temperaturbereichs stabil. Im allgemeinen werden die für die Verarbeitung benötigten wässrigen Bleichzubereitungen in der Form verdünnter wässriger Lösungen, die die genannten Komponenten enthalten, verwendet. Es sind aber auch andere Methoden denkbar, z. B. die Anwendung in Pastenform.

Dieser Temperaturbereich gilt auch für die anderen Verarbeitungsschritte. Die wässrige Bleichzubereitung gemäss der vorliegenden Erfindung kann z. B. aus flüssigen, insbesondere wässrigen Konzentraten einzelner oder aller Komponenten ((a) bis (f)) hergestellt werden. Vorteilhaft verwendet man z. B. zwei flüssige Konzentrate, deren eines die starke Säure (a) und das Oxydationsmittel (c) und deren anderes die übrigen Komponenten (b), (d), (e) und gegebenenfalls (f) enthält, wobei im letzteren Konzentrat zur Verbesserung der Löslichkeit, insbesondere der Komponente (e) ein zusätzliches Lösungsmittel wie Aethyl-, Propyl- oder Benzylalkohol, Aethylenglykolmethyl- oder -äthyläther zugesetzt werden kann.

Die zur Anwendung gelangenden wässrigen Bleichzubereitungen enthalten in der Regel die Komponenten (a) bis (f) in den folgenden Mengen :

(a) starke Säure : 10 bis 200 g/l
(b) wasserlösliches Jodid : 2 bis 50 g/l, vorzugsweise 5 bis 25 g/l ;
(c) wasserlösliches Oxydationsmittel : 1 bis 30 g/l ;
(d) Oxydationsschutzmittel : 0,5 bis 10 g/l ;
(e) Bleichkatalysatoren : 0,05 bis 10 g/l, und gegebenenfalls ;
(f) Bleichbeschleuniger : 1 bis 5 g/l.

Als starke Säuren (Komponente (a)), können die kombinierten Farb- und Silberbleichbäder Alkyl- oder Arylsulfonsäuren und insbesondere p-Toluolsulfonsäure, Schwefelsäure, Sulfaminsäure oder Trichloressigsäure enthalten. Gegebenenfalls können auch Gemische dieser Säuren eingesetzt werden. Der pH-Wert des Bleichbades ist normalerweise nicht grösser als 2 und vorzugsweise nicht grösser als 1.

Die wasserlöslichen Jodide (Komponente (b)) sind in der Regel Alkalimetalliodide, insbesondere Natrium- und Kaliumjodid.

Als Oxydationsmittel (c) verwendet man zweckmässig wasserlösliche aromatische Mononitro- und Dinitroverbindungen, sowie Anthrachinonsulfonsäurederivate. Die Verwendung solcher Oxydationsmittel dient zur Beeinflussung des Farbgleichgewichts und des Kontrasts der im Farbbleichverfahren hergestellten Bilder und ist aus der deutschen Patentschrift 735 672, den britischen Patentschriften 539 190 und 539 509 und der japanischen Patentpublikation 22673/69 bekannt.

Die Mononitro- und Dinitroverbindungen sind vorzugsweise Mono- oder Dinitrobenzolsulfonsäuren, z. B. solche der Formel

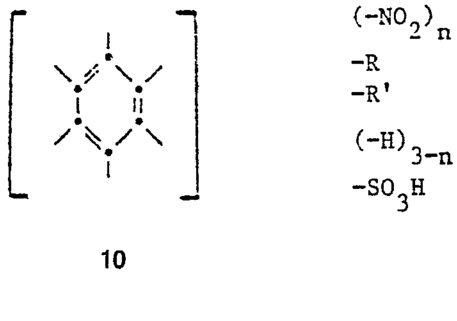

(12)

worin n gleich 1 oder 2 ist und R sowie R' Wasserstoff, Niederalkyl mit 1 bis 4 Kohlenstoffatomen, Alkoxy, Hydroxyl, Amino oder Halogen (Chlor, Brom) bedeuten. Die Sulfonsäuren können als leichtlösliche Salze zugefügt werden. Geeignet sind z. B. die Natrium- und Kaliumsalze der folgenden Säuren :

o-Nitrobenzolsulfonsäure,
m-Nitrobenzolsulfonsäure,
2,4-Dinitrobenzolsulfonsäure,
3,5-Dinitrobenzolsulfonsäure,
3-Nitro-4-chlorbenzolsulfonsäure,
2-Chlor-5-nitrobenzolsulfonsäure,
4-Methyl-3,5-dinitrobenzolsulfonsäure,
3-Chlor-2,5-dinitrobenzolsulfonsäure,
2-Amino-4-nitrobenzolsulfonsäure,
2-Amino-4-nitro-5-methoxybenzolsulfonsäure,
4-Nitrophenol-2-sulfonsäure.

Die Verbindungen der Komponente (c) dienen neben ihrer Funktion als Silberbleichmittel zur Gradationsverflachung.

Als Oxydationsschutzmittel (Korrosionsschutzmittel (d)) werden mit Vorteil Reduktone oder wasserlösliche Mercaptoverbindungen verwendet. Geeignete Reduktone sind insbesondere aci-Reduktone mit einer 3-Carbonylendiol-(1,2)-Gruppierung, wie Reduktin, Triose-Redukton oder vorzugsweise Ascorbinsäure. Als Mercaptoverbindungen kommen z. B. Thioglyzerin, insbesondere jedoch die Verbindungen der Formel

$$HS—C_qH_{2q}—B \qquad (13)$$

oder vorzugsweise

$$HS—(CH_2)_m—COOH \qquad (14)$$

in Betracht, worin q eine ganze Zahl im Wert von 2 bis 12, B eine Sulfonsäure- oder Carbonsäuregruppe und m eine der Zahlen 3 und 4 bedeuten. Als Oxydationsschutzmittel verwendbare Mercaptoverbindungen sind in der DE-A-2 258 076 und der DE-A-2 423 814 beschrieben. Als weitere Oxydationsschutzmittel geeignet sind Alkalimetall-, Erdalkalimetall- oder Ammoniumbisulfitaddukte von organischen Carbonylverbindungen, vorzugsweise Alkalimetall- oder Ammoniumbisulfitaddukte von Monoaldehyden mit 1 bis 4 oder Dialdehyden mit 2 bis 5 Kohlenstoffatomen (DE-A-2 737 142).

Beispielsweise genannt seien das besonders bevorzugte Formaldehydbisulfitaddukt, ferner die entsprechenden Addukte von Acetaldehyd, Propionaldehyd, Butyraldehyd oder Isobutyraldehyd, von Glyoxal, Malondialdehyd oder Glutardialdehyd. Gegebenenfalls sind auch die nachfolgend als Bleichbeschleuniger genannten tertiären wasserlöslichen Phosphine gleichzeitig als Oxydationsschutzmittel einsetzbar.

Geeignete Bleichbeschleuniger (f) sind z. B. quaternäre Ammoniumsalze wie sie aus DE-A-2 139 401 und 2 716 136 bekannt sind. Bevorzugt handelt es sich dabei um quaternäre, gegebenenfalls substituierte Piperidin-, Piperazin-, Pyrazin, Chinolin- oder Pyridinverbindungen, wobei letztere bevorzugt sind. Ferner können auch Tetraalkylammoniumverbindungen (Alkyl mit 1 bis 4 Kohlenstoffatomen) und Alkylendiammonium-verbindungen (Alkylen mit 2 bis 6 Kohlenstoffatomen) in Frage kommen. Im einzelnen seien genannt :

Tetraäthylammoniumjodid ; $(CH_3)_3N^{\oplus}(CH_2)_2N^{\oplus}(CH_3)_3 \cdot 2J^{\ominus}$ ; $(CH_3)_3N^{\oplus}(CH_2)_6N^{\oplus}(CH_3)_3 \cdot 2J^{\ominus}$, N-Methylpyridiniumjodid ;

N-Methylchinoliniumjodid ; N-Hydroxyäthylpyridiniumchlorid ;

N-Hydroxypropylpyridiniumbromid ; N-Methyl-2-Hydroxymethylpyridinium-jodid ; N,N-Dimethylpiperidiniumjodid ;

N,N'-Dimethylpyraziniumfluorsulfat und γ-Picoliniumhydrogensulfat.

Weitere Bleichbeschleuniger sind die aus der DE-OS 2 651 969 bekannten wasserlöslichen tertiären Phosphine, die vorzugsweise mindestens eine Cyanoäthylgruppierung enthalten.

Sie entsprechen z. B. der Formel

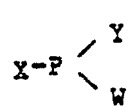

(15)

worin W-$C_rH_{2r}CN$, —$C_rH_{2r}NO_2$ oder ein gegebenenfalls substituierter Arylrest oder ein heterocyclischer Rest, r 1 bis 25, X gegebenenfalls substituiertes Alkyl und Y Hydroxyalkyl, Alkoxyalkyl, Sulfoalkyl,

Aminoalkyl (Alkyl je 1 bis 25, vorzugsweise 2 bis 4 Kohlenstoffatome), Phenyl, Sulfophenyl oder Pyridyl ist.

Bevorzugte tertiäre Phosphine entsprechen der Formel

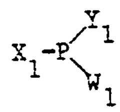
(16)

worin $X_1$—$CH_2CH_2CN$ oder —$(CH_2)_2OCH_3$, $Y_1$—$(CH_2)_2SO_3^{\ominus}M^{\oplus}$, —$(CH_2)_3$—$SO_3^{\ominus}M^{\oplus}$, —$(CH_2)_4$—$SO_3^{\ominus}M^{\oplus}$, —$(CH_2)_2OCH_3$ oder —$CH_2N(C_2H_5)_2$, $W_1$—$CH_2CH_2CN$ oder Phenyl und $M^{\oplus}$ ein Kation, insbesondere ein Alkalimetallkation, z. B. das Natrium- oder Kaliumkation ist.

Im einzelnen seien die folgenden Verbindungen genannt :

Bis-(β-cyanoäthyl)-2-sulfoäthylphosphin (Natriumsalz),
Bis-(β-cyanoäthyl)-3-sulfopropylphosphin (Natriumsalz),
Bis-(β-cyanoäthyl)-4-sulfobutylphosphin (Natriumsalz),
Bis-(β-cyanoäthyl)-2-methoxyäthylphosphin,
Bis-(2-methoxyäthyl)-(β-cyanoäthyl)-phosphin,
(β-cyanoäthyl)-phenyl-3-sulfopropylphosphin (Natriumsalz),
(β-Cyanoäthyl)-phenyl-2-methoxyäthylphosphin und
Bis-(2-methoxyäthyl)-phenylphosphin.

Alle Bäder können weitere übliche Zusätze wie z. B. Härtungsmittel, Netzmittel, optische Aufheller oder UV-Schutzmittel enthalten.

Zur Silberentwicklung können Bäder üblicher Zusammensetzung angewendet werden, z. B. solche, die als Entwicklersubstanz Hydrochinon und gegebenenfalls zusätzlich 1-Phenyl-3-pyrazolidinon enthalten. Gegebenenfalls enthält bereits das Silberentwicklungsbad einen Bleichkatalysator.

Das Silberfixierbad kann in bekannter und üblicher Weise zusammengesetzt sein. Als Fixiermittel dient z. B. Natriumthiosulfat oder mit Vorteil Ammoniumthiosulfat, gewünschtenfalls mit Zusätzen wie Natriumbisulfit und/oder Natriummetabisulfit.

## Beispiel 1

Herstellung des Farbstoffs der Formel

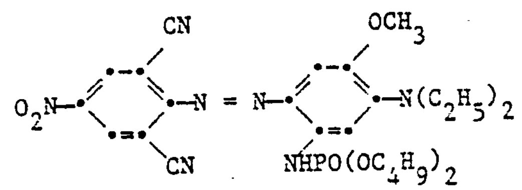
(124)

0,88 g (0.003 mol) 2,6-Dibromo-4-nitro-anilin werden bei 15 °C in 15 ml Dioxan mit 0,4 g Nitrosylschwefelsäure in Gegenwart von 1 ml Ameisensäure und 0,5 ml Methansulfonsäure diazotiert. 1,05 g Phosphorsäuredibutylester-[4-methoxy-3-(diaethylamino)-anilid] in 10 ml Dioxan werden zugefügt. Das Gemisch wird mit 50 ml Eiswasser verdünnt, mit Natriumacetat gepuffert und noch 30 Minuten gerührt. Der Niederschlag wird abgesaugt und in einem Acetonitril-Wasser-Gemisch umkristallisiert. Das rotviolette Zwischenprodukt der Formel

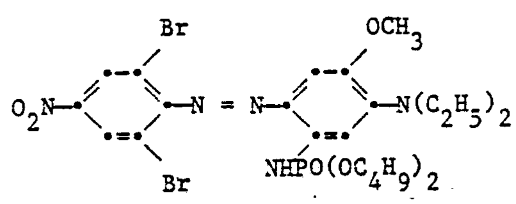
(124a)

wird in 10 ml N-Methyl-pyrrolidon in Gegenwart 0,2 g Kupfer (I)-cyanid gelöst. Das Gemisch wird unter

Stickstoff 60 Min. gerührt und schliesslich in 100 ml Eiswasser gegossen. Der Niederschlag wird abgesaugt und in Methylenchlorid gelöst. Die erhaltene Lösung wird zweimal mit 40 %iger Ammoniumrhodanid-Lösung, dann einmal mit Natriummercapto-propionat-Lösung, einmal mit Natriumbicarbonat-Lösung und schliesslich mit Wasser gewaschen. Die Lösung wird über Magnesiumsulfat getrocknet und das Lösungsmittel abgedampft.

Der Rückstand wird auf Kieselgel mit einem Toluol-Aceton (19:1) Gemisch eluiert. Der Farbstoff wird schliesslich in einem Chloroform/Cyclohexan Gemisch umkristallisiert.

Man erhält 0,2 g eines blauen Farbstoffes mit folgenden physikalischen Daten :

Smp. : 145-148 °C und

$\lambda_{max}$ $CHCl_3$ = 664 nm ($\varepsilon$ = 91 680)

$\lambda_{max}$ Gel = 646 nm ; 610 nm

## Beispiel 2

Herstellung des Farbstoffs der Formel

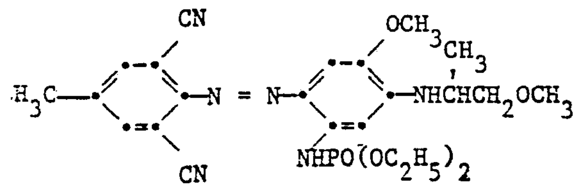

(104)

0,8 g (0.003 m) 2,6-Dibromo-4-methyl-anilin werden in 20 ml Acetonitril bei ca. 5 °C mit 0,4 g Nitrosylschwefelsäure in Gegenwart von 0,3 ml Methansulfonsäure diazotiert. 1,04 g Phosphorsäure-diaethylester-[4-methoxy-3{(1-methoxy-2-propyl)-amino}-anilid] in 5 ml Acetonitril werden zugefügt. Das Gemisch wird mit 50 ml Eiswasser verdünnt, mit Natriumacetat gepuffert und noch 30 Min. gerührt. Der ölige Rückstand wird dekantiert und in Methylenchlorid gelöst. Die erhaltene organische Lösung wird mit Wasser gewaschen und über Magnesiumsulfat getrocknet. Das Lösungsmittel wird abgedampft.

Das organgefarbene Zwischenprodukt der Formel

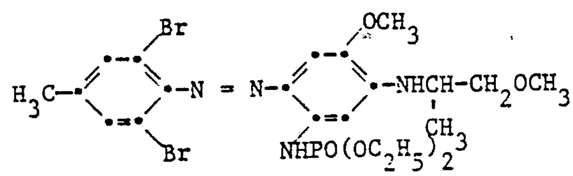

(104a)

wird in 12 ml N-Methyl-pyrrolidon gelöst. 0,4 g Kupfer (I)-cyanid werden zugefügt. Das Gemisch wird unter Stickstoff 16 Stunden gerührt und schliesslich in Wasser ausgetragen. Der Niederschlag wird abgesaugt und in Methylenchlorid gelöst. Die erhaltene Lösung wird zweimal mit 40 %iger Ammoniumrhodanid-Lösung, dann einmal mit Natrium-mercaptopropionat-Lösung, einmal mit Natriumbicarbonat-Lösung und schliesslich mit Wasser gewaschen.

Die Lösung wird über Magnesiumsulfat getrocknet und das Lösungsmittel wird abgedampft.

Der Rückstand wird auf einer Kieselgelsäule mit einem Toluol-Aceton (19 : 1) Gemisch eluiert. Der Farbstoff wird schliesslich in Acetonitril umkristallisiert.

Man erhält 0,5 g (48 %) eines roten Farbstoffs mit folgenden physikalischen Daten :

Smp. : 131-133 °C

$\lambda_{max}$ $CHCl_3$ = 534 nm ($\varepsilon$ = 37 140) ; 557 nm ($\varepsilon$ = 38 730)

$\lambda_{max}$ Gel = 541 nm ; 560 nm

## Beispiel 3

Herstellung des Farbstoffs der Formel

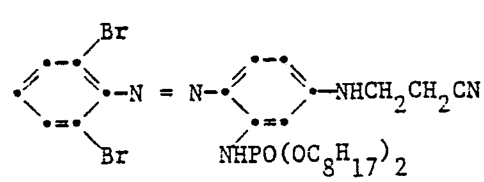

(137)

0,75 g (0.003 m) 2,6-Dibrom-anilin werden in 20 ml Acetonitril gelöst und auf ca. 5° gekühlt. 0,40 g Nitrosylschwefelsäure werden zugefügt. Das Gemisch wird 20 Minuten bei 5 °C gerührt. 1,4 g Phosphorsäuredioctylester-[3-(2-cyanoaethylamino)-anilid] in 3 ml Acetonitril und 0,35 ml Essigsäure werden zugefügt. Das Gemisch wird mit 50 ml Eiswasser verdünnt, mit Natriumacetat gepuffert und noch 30 Minuten bei 5 °C gerührt. Der ölige Rückstand wird abgetrennt und in Methylenchlorid gelöst. Die erhaltene organische Schicht wird mit Wasser gewaschen und getrocknet. Das Lösungsmittel wird abgedampft. Der Rückstand wird auf Kieselgel mit einem Toluol/Aceton (19 : 1) Gemisch eluiert.

Man erhält 0,4 g (18 %) eines öligen, gelben Farbstoffs mit folgenden physikalischen Daten :

$\lambda_{max}$ $CHCl_3$ = 389 nm (ε = 17 170)

$\lambda_{max}$ Gel = 415 nm (ε = 21 130)

Auf analoge Weise werden weitere, in den Tabellen 1 bis 3 zusammengestellte Farbstoffe der Formel

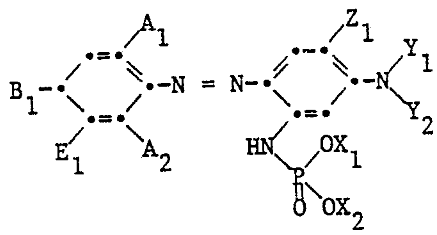

hergestellt.

(Siehe Tabellen 1, 2, 3, 4, Seite 15 ff.)

Tabelle 1

| Verbindung Nr. | $X_1$ | $X_2$ | $Y_1$ | $Y_2$ | $Z_1$ | $A_2$ | $E_1$ | $B_1$ | $A_1$ | $\lambda_{max}^{CHCl_3}$ | $\varepsilon$ mol | $\lambda_{max}^{Gel}$ |
|---|---|---|---|---|---|---|---|---|---|---|---|---|
| 101 | $C_2H_5$ | $C_2H_5$ | H | $CH(CH_3)CH_2OCH_3$ | $OCH_3$ | CN | H | $CH=C(CN)_2$ | CN | 661 | 104200 | 609 |
| 102 | " | " | " | " | " | CN | H | $CH=C(CN)-CO_2C_2H_5$ | CN | 642 | 81900 | 617 |
| 103 | " | " | " | " | " | CN | H | Cl | CN | 576 | 46420 | 579 |
| 104 | " | " | " | " | " | CN | H | $CH_3$ | CN | 557 | 38730 | 561 |
| 105 | " | " | " | $CH(CH_3)C_2H_5$ | $CH_3$ | CN | H | Cl | CN | 531 | 39350 | 541 |
| 106 | " | " | $C_2H_5$ | $C_2H_5$ | H | Br | H | $C_2H_5$ | Br | 425 | 25910 | 435 |
| 107 | " | " | " | " | H | CN | H | " | CN | 525 | 39240 | 533 |
| 108 | " | " | " | " | H | CN | H | $NO_2$ | CN | 615 | 71520 | 617 |
| 109 | " | " | " | " | $OCH_3$ | CN | H | $SO_2NH(CH_2)_3OCH_3$ | CN | 616 | 71280 | 617 |
| 110 | " | " | " | " | " | CN | H | $CH=C(CN)_2$ | CN | 680 | 117700 | 629 |
| 111 | " | " | " | " | " | CN | H | $COCH_3$ | CN | 624 | 76110 | 624 |
| 112 | " | " | " | " | " | CN | H | CN | $NO_2$ | 622 | 68710 | 620 |
| 113 | " | " | " | " | " | CN | H | $NO_2$ | CN | 645 | 93430 | 646 |
| 114. | $C_4H_9$ | $C_4H_9$ | " | $C_2H_4CN$ | H | Br | H | H | Br | 393 | 18240 | 415 |

Tabelle 1 (Fortsetzung)

| Verbindung Nr. | $X_1$ | $X_2$ | $Y_1$ | $Y_2$ | $Z_1$ | $A_2$ | $E_1$ | $B_1$ | $A_1$ | $\lambda_{max}^{CHCl_3}$ | $\varepsilon_{mol}$ | $\lambda_{max}^{Gel}$ |
|---|---|---|---|---|---|---|---|---|---|---|---|---|
| 115 | $C_4H_9$ | $C_4H_9$ | H | $C_2H_4CN$ | H | Br | H | $CH_3$ | Br | 397 | 18970 | 415 |
| 116 | " | " | H | " | H | Br | H | $CH_3$ | $CH_3$ | 394 | 21960 | 411 |
| 117 | " | " | H | " | H | $CH_3$ | H | Br | $CH_3$ | 390 | 20330 | 407 |
| 118 | $C_2H_4OC_2H_5$ | $C_2H_4O$ $C_2H_5$ | H | $CH(CH_3)CH_2OCH_3$ | $OCH_3$ | CN | H | H | CN | 561 | 36870 | 566 |
| 119 | $C_4H_9$ | $C_4H_9$ | H | " | " | CN | H | $C_2H_4CN$ | CN | 571 | 43780 | 568 |
| 121 | " | " | " | " | " | CN | H | $CH=C(CN)_2$ | CN | 680 | 121600 | 674 |
| 122 | " | " | " | " | " | CN | H | $CH=C(CN)-CO_2C_2H_5$ | CN | 666 | 101200 | 665 |
| 123 | " | " | $C_2H_5$ | $C_2H_5$ | $OCH_3$ | CN | H | CN | CN | 624 | 84180 | 626 |
| 124 | " | " | " | " | " | CN | H | $NO_2$ | CN | 644 | 91680 | 646 |
| 125 | " | " | " | " | " | CN | $CH_3$ | $NO_2$ | CN | 634 | 80120 | 636 |
| 126 | $CH_3$ | $CH_3$ | $C_4H_9$ | $C_4H_9$ | " | CN | H | $CH=C(CN)-CO_2(C_2H_4O)_2C_2H_5$ | $NO_2$ | 668 | 96620 | 664 |
| 127 | " | " | " | " | " | CN | H | CN | $NO_2$ | 625 | 76970 | 624 |
| 128 | " | " | " | " | " | CN | H | $NO_2$ | CN | 646 | 91730 | 649 |

Tabelle 1 (Fortsetzung)

| Verbindung Nr. | $X_1$ | $X_2$ | $Y_1$ | $Y_2$ | $Z_1$ | $A_2$ | $E_1$ | $B_1$ | $A_1$ | $\lambda_{max}^{CHCl_3}$ | $\varepsilon_{mol}$ | $\lambda_{max}^{Gel}$ |
|---|---|---|---|---|---|---|---|---|---|---|---|---|
| 129 | $CH_3$ | $CH_3$ | $C_4H_9$ | $C_4H_9$ | $OCH_3$ | CN | H | $NO_2$ | $NO_2$ | 646 | 33670 | 645 |
| 130 | $C_6H_5$ | $C_6H_5$ | " | " | " | CN | H | $CH=C(CN)_2$ | CN | 684 | 121700 | 633 |
| 131 | " | " | " | " | " | CN | H | $CH=C(CN)-CO_2C_2H_5$ | CN | 667 | 99060 | 664 |
| 132 | $C_2H_5$ | $CH_3$ | H | $CH(CH_3)CH_2CH(CH_3)_2$ | " | CN | H | H | CN | 564 | 40530 | 569 |
| 133 | " | " | " | " | " | CN | H | $CH_3$ | CN | 560 | 39480 | 567 |
| 134 | $C_2H_4OC_2H_5$ | $C_2H_4OC_2H_5$ | $C_2H_5$ | $C_2H_5$ | H | CN | H | $NO_2$ | $NO_2$ | 644 | 78950 | 645 |
| 135 | $C_2H_2Cl$ | $C_2H_4Cl$ | $CH_3$ | $CH_3$ | $CH_3$ | CN | H | H | H | 470 | 21750 | 477 |
| 136 | " | " | " | " | " | CN | H | $NO_2$ | H | 546 | 36630 | 541 |
| 137 | $C_8H_{17}$ | $C_8H_{17}$ | H | $C_2H_4CN$ | H | Br | H | H | Br | 389 | 17170 | 415 |
| 138 | " | " | " | " | H | Br | H | $CH_3$ | Br | 394 | 18290 | 416 |
| 139 | " | " | " | " | H | Br | H | $CH_3$ | $CH_3$ | 394 | 20410 | 410 |
| 140 | " | " | " | $CH(CH_3)CH_2OCH_3$ | $OCH_3$ | Br | H | " | " | 442 | 18310 | 452 |
| 141 | " | " | " | " | " | CN | H | H | CN | 565 | 40460 | 567 |
| 142 | " | " | $C_2H_5$ | $C_2H_5$ | " | CN | $CH_3$ | $NO_2$ | CN | 635 | 83800 | 635 |

Tabelle 1 (Fortsetzung)

| Verbindung Nr. | $X_1$ | $X_2$ | $Y_1$ | $Y_2$ | $Z_1$ | $A_2$ | $E_1$ | $B_1$ | $A_1$ | $\lambda_{max}^{CHCl_3}$ | $\varepsilon_{mol}$ | $\lambda_{max}^{Gel}$ |
|---|---|---|---|---|---|---|---|---|---|---|---|---|
| 143 | $C_8H_{17}$ | $C_8H_{17}$ | H | $CH(CH_3)CH_2OCH_3$ | $OCH_3$ | CN | H | $CH_3$ | CN | 548 | 36510 | 561 |
| 144 | " | " | H | " | " | H | H | $NO_2$ | H | 529 | 32560 | 531 |
| 145 | " | " | $C_2H_5$ | $C_2H_5$ | $OCH_3$ | CN | H | CN | $NO_2$ | 622 | 77780 | 620 |
| 146 | $C_4H_9$ | $C_4H_9$ | H | $CH(CH_3)CH_2OCH_3$ | " | CN | H | H | CN | 563 | 38620 | 565 |
| 147 | $CH_2C_6H_5$ | $CH_2C_6H_5$ | H | $CH_2C_6H_5$ | " | CN | H | H | CN | 548 | 42680 | 566 |
| 148 | $C_4H_9$ | $C_4H_9$ | H | $CH(CH_3)CH_2OCH_3$ | " | CN | H | $C_2H_5$ | CN | 559 | 31880 | 562 |
| 149 | " | " | $C_2H_5$ | $C_2H_5$ | " | CN | $CO_2CH_2CH(CH_3)_2$ | $NO_2$ | CN | 649 | 87910 | 655 |
| 150 | " | " | H | $CH(CH_3)CH_2OCH_3$ | " | CN | H | $CH_3$ | CN | 555 | 37870 | 560 |
| 151 | $C_2H_5$ | $CH_3$ | H | $CHCH_2CH(CH_3)_2$<br>$CH_3$ | " | $NO_2$ | H | CN | H | 547 | 41390 | 549 |
| 152 | " | $C_2H_5$ | H | $CHCH_2OCH_3$<br>$CH_3$ | $OC_2H_4OCH_3$ | CN | H | $CH_3$ | CN | 547 | 35830 | 549 |
| 153 | " | " | H | $CHCH_2CH(CH_3)_2$<br>$CH_3$ | $OCH_3$ | CN | H | H | CN | 565 | 39140 | 568 |
| 154 | " | " | H | " | " | CN | H | $C_6H_{11}$ | CN | 560 | 33120 | 565 |
| 155 | " | " | H | " | " | CN | H | $CH_2CH(CH_3)_2$ | CN | 558 | 36930 | 553 |

Tabelle 1 (Fortsetzung)

| Verbindung Nr. | $X_1$ | $X_2$ | $Y_1$ | $Y_2$ | $Z_1$ | $A_2$ | $E_1$ | $B_1$ | $A_1$ | $\lambda_{max}^{CHCl_3}$ | $\varepsilon_{mol}$ | $\lambda_{max}^{Gel}$ |
|---|---|---|---|---|---|---|---|---|---|---|---|---|
| 156 | $C_2H_5$ | $C_2H_5$ | H | $CH-CH_2CH(CH_3)_2$<br>$CH_3$ | $OCH_3$ | CN | H | $CH_3$ | CN | 560 | 38910 | 563 |
| 157 | " | " | H | $CH\ C_2H_5$<br>$CH_3$ | $CH_3$ | CN | H | Cl | CN | 531 | 39350 | 541 |
| 158 | " | " | $C_2H_5$ | $C_2H_5$ | H | CN | H | $CH_2CH_3$ | CN | 525 | 39240 | 533 |
| 159 | $C_4H_9$ | $C_4H_9$ | H | $C_2H_4CN$ | H | H | $CO_2C_2H_5$ | H | H | 406 | 25340 | 433 |
| 160 | " | " | H | " | H | Br | H | $C_4H_9$ | Br | 396 | 18400 | 415 |
| 161 | " | " | H | " | H | Br | H | $CH_3$ | H | 414 | 24080 | 438 |
| 162 | " | " | H | " | H | Br | $OC_2H_5$ | $CH_3$ | Br | 396 | 20050 | 407 |
| 163 | " | " | H | $CHCH_2OCH_3$<br>$CH_3$ | $OC_2H_4OCH_3$ | CN | H | $CH_3$ | CN | 554 | 36130 | 556 |
| 164 | " | " | H | " | $OCH_3$ | CN | H | $OC_2H_4CH(CH_3)_2$ | CN | 546 | 31250 | 557 |
| 165 | $CH(CH_3)_2$ | $CH(CH_3)_2$ | H | $CHCH_2CH(CH_3)_2$<br>$CH_3$ | $OCH_3$ | CN | H | H | CN | 564 | 39680 | 567 |
| 166 | $CH_3$<br>$CH_2CH$<br>$CH_3$ | $CH_3$<br>$CH_2CH$<br>$CH_3$ | H | $CHCH_2OCH_3$<br>$CH_3$ | $OCH_3$ | CN | H | $CH_3$ | CN | 559 | 37770 | 561 |
| 167 | $CH(CH_3)_2$ | $CH(CH_3)_2$ | H | $CHCH_2CH(CH_3)_2$<br>$CH_3$ | $OCH_3$ | CN | H | H | CN | 564 | 39680 | 567 |

Tabelle 1 (Fortsetzung)

| Verbindung Nr. | $X_1$ | $X_2$ | $Y_1$ | $Y_2$ | $Z_1$ | $A_2$ | $E_1$ | $B_1$ | $A_1$ | $\lambda_{max}^{CHCl_3}$ | $\varepsilon_{mol}$ | $\lambda_{max}^{Gel}$ |
|---|---|---|---|---|---|---|---|---|---|---|---|---|
| 168 | $CH(CH_3)_2$ | $CH(CH_3)_2$ | H | $CHCH_2CH(CH_3)_2$<br>$CH_3$ | $OCH_3$ | CN | H | $CH_3$ | CN | 559 | 37430 | 560 |
| 169 | $CH_2CH(CH_3)_2$ | $CH_2CH(CH_3)_2$ | H | $CHCH_2OCH_3$<br>$CH_3$ | $OCH_3$ | CN | H | H | CN | 563 | 39380 | 565 |
| 170 | " | " | H | " | $OCH_3$ | CN | H | $CH_3$ | CN | 559 | 37770 | 561 |
| 171 | " | " | H | $CHCH_2CH(CH_3)_2$<br>$CH_3$ | $OCH_3$ | CN | H | H | CN | 566 | 42800 | 567 |
| 172 | " | " | H | " | $OCH_3$ | CN | H | $CH_3$ | CN | 562 | 41560 | 562 |
| 173 | $C_4H_9$ | $C_4H_9$ | H | $CHCH_2OCH_3$<br>$CH_3$ | $OCH_3$ | H | $CF_3$ | $NO_2$ | H | 529 | 35020 | 537 |
| 174 | $CH(CH_3)_2$ | $CH(CH_3)_2$ | H | $CH-CH_2CH(CH_3)_2$<br>$CH_3$ | $OCH_3$ | H | H | $COOC_2H_5$ | $NO_2$ | 535 | 36500 | 541 |
| 175 | $C_2H_4Cl$ | $C_2H_4Cl$ | $CH_3$ | $CH_3$ | $CH_3$ | H | H | $NO_2$ | $COOC_2H_5$ | 503 | 19090 | 509 |
| 176 | $CH_2CH(CH_3)_2$ | $CH_2CH(CH_3)_2$ | H | $CHCH_2OCH_3$<br>$CH_3$ | $OCH_3$ | $SO_2C_4H_9$ | H | $SO_2C_4H_9$ (i) | H | 535 | 31010 | 537 |
| 177 | $C_2H_5$ | $C_2H_5$ | $C_2H_5$ | $C_2H_5$ | $OCH_3$ | $SO_2CH_3$ | H | $NO_2$ | $CF_3$ | 611 | 42510 | 622 |
| 178 | $CH_2CH(CH_3)_2$ | $CH_2CH(CH_3)_2$ | H | $CHCH_2CH(CH_3)_2$<br>$CH_3$ | $OCH_3$ | H | H | $NO_2$ | H | 533 | 37580 | 538 |
| 179 | " | " | H | $CHCH_2OCH_3$<br>$CH_3$ | $OCH_3$ | H | H | $SO_2mC_6H_5CH_3$ | H | 501 | 32620 | 504 |
| 180 | $CH(CH_3)_2$ | $CH(CH_3)_2$ | H | $CHCH_2CH(CH_3)_2$<br>$CH_3$ | $OCH_3$ | H | $CH_3$ | $NO_2$ | H | 521 | 30580 | 526 |

Tabelle 1 (Fortsetzung)

| Verbindung Nr. | $X_1$ | $X_2$ | $Y_1$ | $Y_2$ | $Z_1$ | $A_2$ | $E_1$ | $B_1$ | $A_1$ | $\lambda_{max}^{CHCl_3}$ | $\varepsilon_{mol}$ | $\lambda_{max}^{Gel}$ |
|---|---|---|---|---|---|---|---|---|---|---|---|---|
| 181 | $C_2H_5$ | $C_2H_5$ | H | $CH(CH_3)CH_2CH(CH_3)_2$ | $OCH_3$ | H | H | $NO_2$ | H | 533 | 36690 | 538 |
| 182 | " | " | H | " | $OCH_3$ | H | $CH_3$ | $NO_2$ | H | 520 | 35010 | 526 |
| 183 | " | " | $C_2H_5$ | $C_2H_5$ | $OCH_3$ | H | $CH_3$ | $NO_2$ | H | 527 | 31310 | 535 |

Tabelle 2

| Verbindung Nr. | $X_1$ | $X_2$ | $Y_2$ | $Y_1$ mit $Z_1$ | $A_2$ | $E_1$ | $B_1$ | $A_1$ | $\lambda_{max}^{CHCl_3}$ | $\varepsilon_{mol}$ | $\lambda_{max}^{Gel}$ |
|---|---|---|---|---|---|---|---|---|---|---|---|
| 281 | $C_2H_5$ | $C_2H_5$ | $C_2H_5$ | $-C(CH_3)_2CH_2CH(CH_3)-$ | CN | H | $NO_2$ | CN | 628 | 82880 | 630 |
| 282 | $C_2H_5$ | $C_2H_5$ | $C_2H_5$ | " | CN | H | $NO_2$ | $NO_2$ | 623 | 68610 | 623 |

Tabelle 3

| Verbin-dung Nr. | $X_1$ | $X_2$ | $Y_1$ | $Y_2$ | $Z_1$ | $A_2$ | $E_1$ mit $B_1$ | $A_1$ | $\lambda_{max}^{CHCl_3}$ | $\varepsilon_{mol}$ | $\lambda_{max}^{Gel}$ |
|---|---|---|---|---|---|---|---|---|---|---|---|
| 383 | $C_4H_9$ | $C_4H_9$ | H | $C_2H_4CN$ | H | Br | $-(CH_2)_3-$ | Br | 393 | 21210 | 410 |
| 384 | $C_4H_9$ | $C_4H_9$ | H | $\underset{CH_3}{\underset{\mid}{C}}HCH_2OCH_3$ | $OCH_3$ | CN | $-(CH_2)_3-$ | CN | 545 | 37340 | 560 |
| 385 | $C_2H_5$ | $C_2H_5$ | H | $\underset{CH_3}{\underset{\mid}{C}}HCH_2\overset{CH_3}{\overset{\mid}{\underset{CH_3}{\underset{\mid}{C}}}}H$ | $OCH_3$ | CN | $-(CH_2)_3-$ | CN | 545 | 38420 | 564 |
| 386 | $C_2H_5$ | $C_2H_5$ | $C_2H_5$ | $C_2H_5$ | $OCH_3$ | CN | $-\overset{O}{\overset{\|}{C}}-\underset{(CH_2)_2OCH_3}{\underset{\mid}{N}}-\overset{O}{\overset{\|}{C}}-$ | CN | 638 | 29620 | 638 |

Auch die in der folgenden Tabelle 4 zusammengestellten Farbstoffe können nach der im Beispiel 3 beschriebenen Methode hergestellt werden.

Tabelle 4

| Verbindung Nr. | | $\lambda_{max}^{CHCl_3}$ | $\varepsilon_{mol}$ | $\lambda_{max}^{Gel}$ |
|---|---|---|---|---|
| 401 | 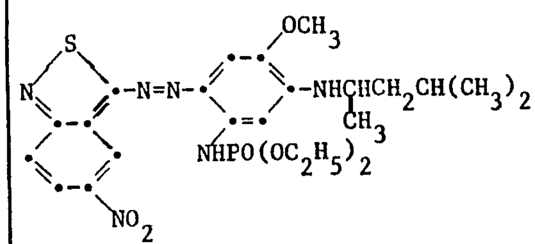 | 641 | 45060 | 643 |
| 402 | 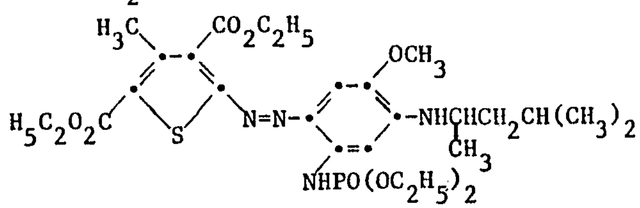 | 559 | 36790 | 565 |
| 403 | 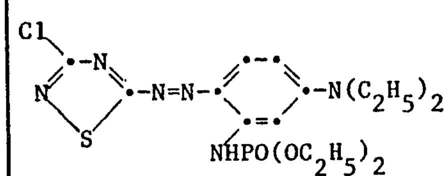 | 527 | 44260 | 536 |

Tabelle 4 (Fortsetzung)

| Verbindung Nr. | | $\lambda_{max}^{CHCl_3}$ | $\varepsilon_{mol}$ | $\lambda_{max}^{Gel}$ |
|---|---|---|---|---|
| 404 | 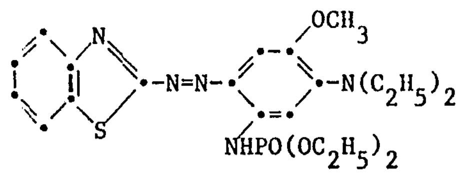 | 551 | 40150 | 552 |
| 405 | 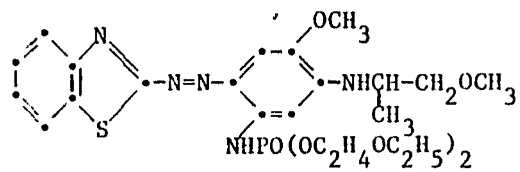 | 536 | 39000 | 538 |
| 406 | 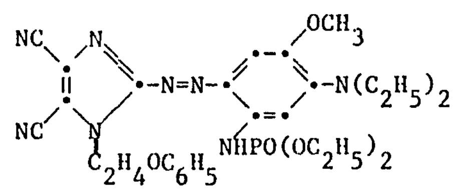 | 556 | 26820 | 540 |
| 407 | 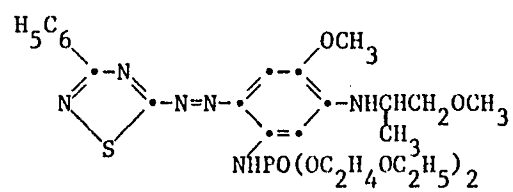 | 543 | 38720 | 545 |

Beispiel 4

11 mg Farbstoff der Formel

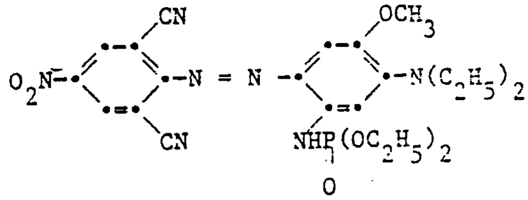

(113)

werden in 2 ml eines Gemisches aus Aethylacetat und Trikresylphosphat (Mischungsverhältnis 9 : 1) gelöst. Diese Lösung gibt man zu einer Mischung aus 6,6 ml 6 %iger Gelatinelösung und 1,4 ml 3 %iger Lösung von Dibutylnaphthalinsulfonsäure. Die gesamte Mischung wird mit Ultraschall emulgiert. 2,5 ml dieser Farbstoffemulsion werden mit 2 ml 4 %iger Gelatinelösung, 5 ml Wasser, 1 ml 1 %iger Härterlösung und 0,5 ml einer Silberjodidgelatineemulsion, welche etwa 22 g Silber pro kg Gelatine enthält, vermischt. Das Gemisch wird auf einen opaken Triacetatträger (Format 13 × 18 cm) gegossen und getrocknet. Von diesem Material wird ein Streifer (Format 3,5 × 18 cm) hinter einem Stufenkeil und Kodakfiltern (2B und 47B) belichtet und anschliessend bei 24 °C folgendermassen weiterverarbeitet :

6 Minuten Entwicklung mit einer Lösung der Zusammensetzung (pro Liter Lösung) :

| | |
|---|---|
| Natriumsulfit | 50 g |
| 1-Phenyl-3-pyrazolidon | 0,2 g |
| Hydrochinon | 6 g |
| Natriumcarbonat | 35 g |
| Kaliumbromid | 4 g |
| Benztriazol | 0,3 g |

4 Minuten wässern
6 Minuten bleichen
2 Minuten wässern
8 Minuten fixieren mit einer Lösung der Zusammensetung (pro Liter Lösung) :

| | |
|---|---|
| Natriumthiosulfat | 200 g |
| Natriummetabisulfit | 20 g |

6 Minuten wässern

und schliesslich trocknen.

Das Bleichbad enthält dabei folgende Komponenten :

| | |
|---|---|
| Wasser | 1 950 ml |
| konz. Schwefelsäure | 56 ml |
| 4-Mercaptobuttersäure | 2 ml |
| Natriumjodid | 18 g |
| 4-Nitrophenol-2-sulfonsäure (Dinatriumsalz) und | 12 g |
| 6-Methoxy-2,3-dimethyl-chinoxalin | 2 g |

Auf diese Weise erhält man einen brillanten, lichtechten, blaugrünen Keil. An der Stelle ursprünglich maximaler Silberdichten ist der Farbstoff vollständig auf Weiss gebleicht.

Beispiel 5

Ein opaker Triacetatträger wird gemäss Beispiel 4 beschichtet, jedoch enthält die Silberhalogenidgelatinemulsion 16 mg Farbstoff der Formel

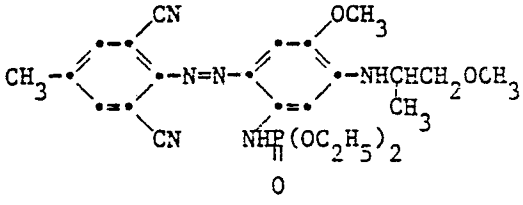

(104)

Nach Belichtung und Verarbeitung des Materials nach der in Beispiel 4 beschriebenen Weise erhält man einen brillanten, purpurfarbenen Keil hoher Lichtechtheit.

Beispiel 6

Wird ein opaker Triacetatträger gemäss Beispiel 4 mit einer Silberhalogenidemulsion beschichtet, die 37 mg Farbstoff der Formel

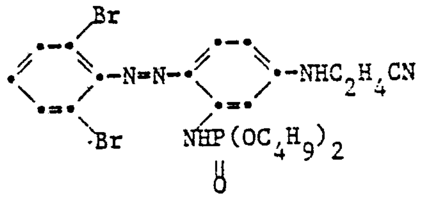

(114)

enthält, nach die in Beispiel 4 beschriebenen Weise belichtet und verarbeitet, so erhält man einen brillanten, gelben Keil hoher Lichtechtheit.

Beispiel 7

235 mg Farbstoff der Formel

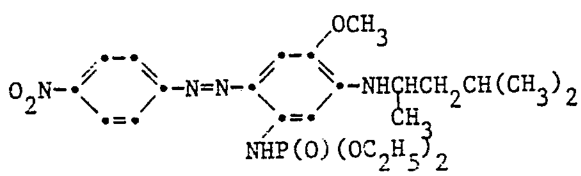

(182)

und 470 mg Tris (isopropylphenyl-) phosphat werden in 10 ml Aethylacetat gelöst. Diese Lösung gibt man zu 21,6 g einer 10 %igen Gelatinelösung, und 0,8 ml einer 4,6 %igen Lösung des Natriumsalzes der Dibutylnaphthalinsulfonsäure. Das Gemisch wird mit 15 ml einer 1 %igen Härterlösung und Wasser auf 80 g ergänzt und mit Ultraschall emulgiert. Zu dieser Farbstoffemulsion vermischt man 20 g einer grünsensibilisierten Gelatinesilberbromidiodidemulsion. Der Silbergehalt beträgt 22,6 g pro kg Gelatine. 86 ml dieses Gemisches werden auf einem Triacetatträger (1 m$^2$) gegossen und getrocknet. Hinter einem Stufenkeil wird das so erhaltene lichtempfindliche Material mit grünem Licht belichtet und bei 30 °C wie folgt verarbeitet :

| | |
|---|---|
| Entwicklung | 3 Minuten |
| Wässerung | 1 Minuten |
| Silber- und Farbbleichung | 5 Minuten |
| Wässerung | 1 Minuten |
| Fixierung | 4 Minuten |
| Wässerung | 6 Minuten |
| Trocknung | |

Das Entwicklerbad hat pro Liter Lösung folgende Zusammensetzung :

| | |
|---|---|
| Natriumsulfit | 50 g |
| 1-Phenyl-3-pyrazolidon | 0,2 g |
| Hydrochinon | 6 g |
| Natriumcarbonat | 35 g |
| Kaliumbromid | 4 g |
| Benztriazol | 0,3 g |

Das Silberfarbbleichbad hat pro Liter Lösung die Zusammensetzung :

| | |
|---|---|
| Konzentrierte Schwefelsäure | 28 ml |
| Natriumiodid | 9 g |

| | |
|---|---|
| 4-Nitrophenol-2-sulfonsäure (Dinatriumsalz) | 6 g |
| 6-Methoxy-2,3-dimethylchinoxalin | 1 g |
| Bis-(2-cyanäthyl)-(2-sulfoäthyl)-phosphin-(Natriumsalz) | 3 g |

Das Fixierbad enthält pro Liter Lösung :

| | |
|---|---|
| Natriumthiosulfat | 200 g |
| Natriummetabisulfit | 20 g |

Man erhält einen brillanten, lichtechten Purpurkeil, der an den Stellen der ursprünglich grössten Silberdichte vollständig auf weiss gebleicht ist.

**Ansprüche**

1. Azofarbstoffe, dadurch gekennzeichnet, dass sie der Formel

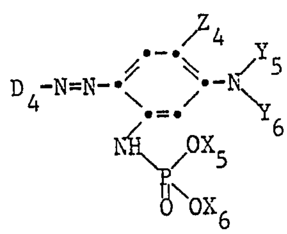

entsprechen, worin

$X_5$ und $X_6$ unabhängig voneinander gegebenenfalls mit Hydroxyl, Methoxy, Aethoxy, Cyano, Fluor, Chlor oder Brom substituiertes Alkyl mit 1 bis 12 Kohlenstoffatomen oder Phenyl oder Benzyl sind,

$Y_5$ Wasserstoff oder gegebenenfalls mit Alkoxy mit 1 bis 4 Kohlenstoffatomen substituiertes Alkyl mit 1 bis 5 Kohlenstoffatomen,

$Y_6$ Wasserstoff, gegebenenfalls mit Methoxy, Phenyl, Hydroxyl, Fluor, Chlor, Brom, Carbalkoxy mit 2 bis 6 Kohlenstoffatomen oder Acyloxy mit 2 bis 7 Kohlenstoffatomen oder Cyano substituiertes Alkyl mit 1 bis 8 Kohlenstoffatomen oder mit Alkyl oder Alkoxy mit je 1 bis 5 Kohlenstoffatomen oder Chlor substituiertes Aryl ist oder zusammen mit $Y_5$ die zur Vervollständigung eines gegebenenfalls mit Carbalkoxy mit 2 bis 5 Kohlenstoffatomen substituierten, gesättigten 5-gliedrigen Ringes notwendigen Atome darstellt,

$Z_4$ Wasserstoff, Alkyl oder Alkoxy mit je 1 bis 4 Kohlenstoffatomen, gegebenenfalls mit Methoxy oder Aethoxy substituiertes Alkoxy mit 1 oder 2 Kohlenstoffatomen, Chlor, Brom oder Cyano, Carbalkoxy mit 2 bis 5 Kohlenstoffatomen oder diejenigen Atome bedeutet, um zusammen mit $Y_5$ einen methylsubstituierten, gegebenenfalls ein Sauerstoffatom als weiteres Heteroatom enthaltenden, gesättigten 6-gliedrigen Ring zu bilden,

$D_4$ gegebenenfalls mit Chlor oder Phenyl substituiertes Thiadiazolyl, gegebenenfalls mit Cyano substituiertes Imidazolyl, wobei mindestens eines der Stickstoffatome gegebenenfalls mit $—C_2H_4OC_6H_5$ substituiert ist; gegebenenfalls mit Nitrogruppen substituiertes Benzthiazolyl oder Benzisothiazolyl, oder gegebenenfalls mit Methyl- und/oder Carbäthoxygruppen substituiertes Thienyl oder gegebenenfalls mit Alkyl oder Alkoxy mit je 1 bis 4 Kohlenstoffatomen, Cycloalkyl mit 5 oder 6 Kohlenstoffatomen, Phenyl, Halogen, Trifluormethyl, Cyano, Nitro, (Carbonsäure-) Acyl, Acetyl, Benzoyl, Carbalkoxy mit 2 bis 5 Kohlenstoffatomen, Carbalkoxyäthoxy mit 1 bis 4 Kohlenstoffatomen im Alkoxyteil, Alkylsulfon mit 1 bis 5 Kohlenstoffatomen, Phenylsulfon, N-alkyl- oder N,N-dialkylsubstituiertes Sulfonamido mit je 1 bis 4 Kohlenstoffatomen im Alkylteil, wobei der Alkylteil gegebenenfalls mit Methoxy substituiert ist, oder gegebenenfalls mit Cyano und/oder Carbäthoxy substituiertes Alkenyl mit 2 bis 4 Kohlenstoffatomen substituiertes Phenyl ist.

2. Azofarbstoffe nach Anspruch 1, dadurch gekennzeichnet, dass sie der Formel

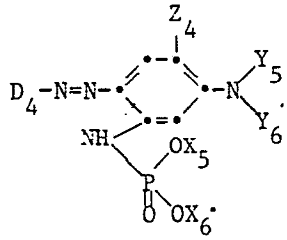

entsprechen, worin $X_5$, $X_6$, $Y_5$, $Y_6$, $Z_4$ und $D_4$ die in Anspruch 1 angegebene Bedeutung haben.

3. Azofarbstoffe nach Anspruch 2, dadurch gekennzeichnet, dass sie der Formel

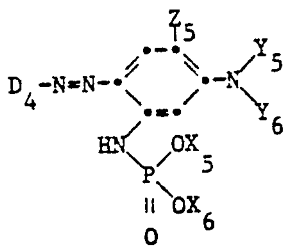

entsprechen, worin

$Z_5$ Wasserstoff, Alkyl oder Alkoxy mit je 1 bis 4 Kohlenstoffatomen, $—OC_2H_4OCH_3$ oder diejenigen Atome bedeutet, um zusammen mit $Y_5$ einen gegebenenfalls ein Sauerstoffatom als weiteres Heteroatom enthaltenden, gesättigten 6-gliedrigen Ring zu bilden, und

$X_5$, $X_6$, $Y_5$, $Y_6$ und $D_4$ die in Anspruch 2 angegebene Bedeutung haben.

4. Azofarbstoffe nach Anspruch 3, dadurch gekennzeichnet, dass sie der Formel

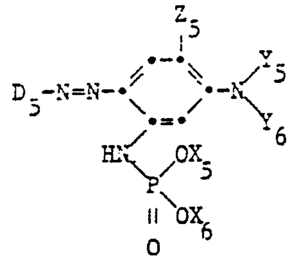

entsprechen, worin

$D_5$ gegebenenfalls mit Alkyl oder Alkoxy mit je 1 bis 4 Kohlenstoffatomen, Cycloalkyl mit 5 oder 6 Kohlenstoffatomen, Phenyl, Halogen, Trifluormethyl, Cyano, Nitro, (Carbonsäure-) Acyl, Acetyl, Benzoyl, Carbalkoxy mit 2 bis 5 Kohlenstoffatomen, Carbalkoxyäthoxy mit 1 bis 4 Kohlenstoffatomen im Alkoxyteil, Alkylsulfon mit 1 bis 5 Kohlenstoffatomen, Phenylsulfon, N-alkyl- oder N,N-dialkylsubstituiertes Sulfonamido mit je 1 bis 4 Kohlenstoffatomen im Alkylteil, wobei der Alkylteil gegebenenfalls mit Methoxy substituiert ist, oder gegebenenfalls mit Cyano und/oder Carbäthoxy substituiertes Alkenyl mit 2 bis 4 Kohlenstoffatomen substituiertes Phenyl ist und

$X_5$, $X_6$, $Y_5$, $Y_6$ und $Z_5$ die in Anspruch 3 angegebene Bedeutung haben.

5. Azofarbstoffe nach Anspruch 4, dadurch gekennzeichnet, dass sie der Formel

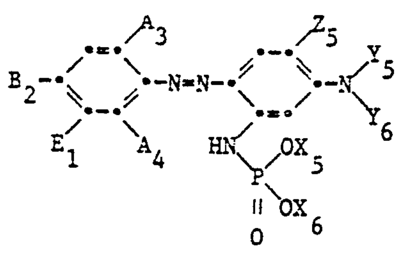

entsprechen, worin

$A_3$ und $A_4$ unabhängig voneinander Wasserstoff, Alkyl mit 1 bis 4 Kohlenstoffatomen, Carbalkoxy mit 2 bis 5 Kohlenstoffatomen, Carbalkoxyäthoxy mit 1 bis 4 Kohlenstoffatomen im Alkoxyteil, Trifluormethyl, Cyano, Nitro, Alkylsulfon mit 1 bis 5 Kohlenstoffatomen oder Halogen sind,

$B_2$ Wasserstoff, gegebenenfalls mit elektronegativen Gruppen substituiertes Alkyl mit 1 bis 4 Kohlenstoffatomen, Alkoxy mit 1 oder 2 Kohlenstoffatomen, gegebenenfalls mit elektronegativen Gruppen substituiertes Alkenyl mit 2 bis 4 Kohlenstoffatomen, $T_2—CO—$, worin $T_2$ Methyl oder Phenyl ist, Carbalkoxy mit 2 bis 5 Kohlenstoffatomen, Alkylsulfon mit 1 bis 6 Kohlenstoffatomen, Phenylsulfon, N-alkyl- oder N,N-dialkylsubstituiertes Sulfonamido mit je 1 oder 2 Kohlenstoffatomen im Alkylteil, wobei der Alkylteil gegebenenfalls mit Methoxy substituiert ist, Cyano, Nitro oder Halogen ist,

$E_1$ Wasserstoff, Alkyl mit 1 bis 4 Kohlenstoffatomen, eine elektronegative Gruppe oder diejenigen Atome darstellt, um zusammen mit $B_2$ einen gesättigten 5- oder 6-gliedrigen Ring oder ein cyclisches Imid zu bilden, worin das Stickstoffatom gegebenenfalls mit Alkoxyalkyl substituiert ist, worin der Alkoxy- und Alkylteil je 1 bis 4 Kohlenstoffatome enthalten, und

$X_5$, $X_6$, $Y_5$, $Y_6$ und $Z_5$ die in Anspruch 4 angegebene Bedeutung haben.

6. Azofarbstoffe nach Anspruch 5, dadurch gekennzeichnet, dass sie der Formel

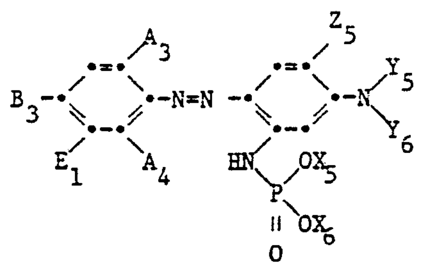

entsprechen, worin

$B_3$ Wasserstoff, gegebenenfalls mit Cyano und/oder Carbäthoxy substituiertes Alkyl mit 1 bis 4 Kohlenstoffatomen, gegebenenfalls mit Cyano und/oder Carbäthoxy substituiertes Alkenyl mit 2 bis 4 Kohlenstoffatomen, Acetyl, Benzoyl, Cyano, Nitro, Halogen, Alkylsulfon mit 1 bis 6 Kohlenstoffatomen oder N-alkyl- oder N,N-dialkylsubstituiertes Sulfonamid mit je 1 oder 2 Kohlenstoffatomen im Alkylteil ist und

$X_5$, $X_6$, $Y_5$, $Y_6$, $Z_5$, $A_3$, $A_4$ und $E_1$ die in Anspruch 5 angegebene Bedeutung haben.

7. Verfahren zur Herstellung von Azofarbstoffen der Formel

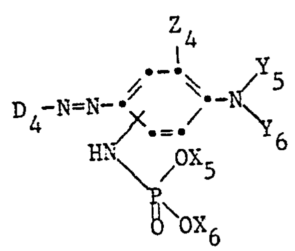

worin

$X_5$ und $X_6$ unabhängig voneinander gegebenenfalls mit Hydroxyl, Methoxy, Aethoxy, Cyano, Fluor, Chlor oder Brom substituiertes Alkyl mit 1 bis 12 Kohlenstoffatomen oder Phenyl oder Benzyl sind,

$Y_5$ Wasserstoff oder gegebenenfalls mit Alkoxy mit 1 bis 4 Kohlenstoffatomen substituiertes Alkyl mit 1 bis 5 Kohlenstoffatomen,

$Y_6$ Wasserstoff, gegebenenfalls mit Methoxy, Phenyl, Hydroxyl, Fluor, Chlor, Brom, Carbalkoxy mit 2 bis 6 Kohlenstoffatomen oder Acyloxy mit 2 bis 7 Kohlenstoffatomen oder Cyano substituiertes Alkyl mit 1 bis 8 Kohlenstoffatomen oder mit Alkyl oder Alkoxy mit je 1 bis 5 Kohlenstoffatomen oder Chlor substituiertes Aryl ist oder zusammen mit $Y_5$ die zur Vervollständigung eines gegebenenfalls mit Carbalkoxy mit 2 bis 5 Kohlenstoffatomen substituierten, gesättigten 5-gliedrigen Ringes notwendigen Atome darstellt,

$Z_4$ Wasserstoff, Alkyl oder Alkoxy mit je 1 bis 4 Kohlenstoffatomen, gegebenenfalls mit Methoxy oder Aethoxy substituiertes Alkoxy mit 1 oder 2 Kohlenstoffatomen, Chlor, Brom oder Cyano, Carbalkoxy mit 2 bis 5 Kohlenstoffatomen oder diejenigen Atome bedeutet, um zusammen mit $Y_5$ einen methylsubstituierten, gegebenenfalls ein Sauerstoffatom als weiteres Heteroatom enthaltenden, gesättigten 6-gliedrigen Ring zu bilden,

$D_4$ gegebenenfalls mit Chlor oder Phenyl substituiertes Thiadiazolyl, gegebenenfalls mit Cyano substituiertes Imidazolyl, wobei mindestens eines der Stickstoffatome gegebenenfalls mit $—C_2H_4OC_6H_5$ substituiert ist; gegebenenfalls mit Nitrogruppen substituiertes Benzthiazolyl oder Benzisothiazolyl, oder gegebenenfalls mit Methyl- und/oder Carbäthoxygruppen substituiertes Thienyl oder gegebenenfalls mit Alkyl oder Alkoxy mit je 1 bis 4 Kohlenstoffatomen, Cycloalkyl mit 5 oder 6 Kohlenstoffatomen, Phenyl, Halogen, Trifluormethyl, Cyano, Nitro, (Carbonsäure-) Acyl, Acetyl, Benzoyl, Carbalkoxy mit 2 bis 5 Kohlenstoffatomen, Carbalkoxyäthoxy mit 1 bis 4 Kohlenstoffatomen im Alkoxyteil, Alkylsulfon mit 1 bis 5 Kohlenstoffatomen, Phenylsulfon, N-alkyl- oder N,N-dialkylsubstituiertes Sulfonamido mit je 1 bis 4 Kohlenstoffatomen im Alkylteil, wobei der Alkylteil gegebenenfalls mit Methoxy substituiert ist, oder gegebenenfalls mit Cyano und/oder Carbäthoxy substituiertes Alkenyl mit 2 bis 4 Kohlenstoffatomen substituiertes Phenyl ist, dadurch gekennzeichnet, dass man eine Diazoverbindung der Formel

$$D_4—N_2^{\oplus}X^{\ominus},$$

worin $D_4$ die oben angegebene Bedeutung hat und $X^{\ominus}$ ein Anion ist, mit einer Verbindung der Formel

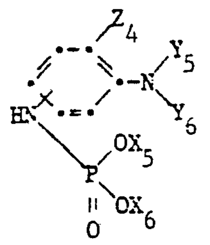

kuppelt, worin $X_5$, $X_6$, $Y_5$, $Y_6$ und $Z_4$ die oben angegebene Bedeutung haben.

8. Verwendung der Azofarbstoffe nach einem der Ansprüche 1 bis 6 als Bestandteile eines photographischen Materials.

9. Verfahren zur Herstellung von photographischem Material, dadurch gekennzeichnet, dass man in mindestens eine Schicht einen Farbstoff gemäss Anspruch 1 einarbeitet.

10. Verwendung des nach Anspruch 9 hergestellten photographischen Materials zur Herstellung photographischer Bilder.

**Claims**

1. Azo dyes, characterised in that they correspond to the formula

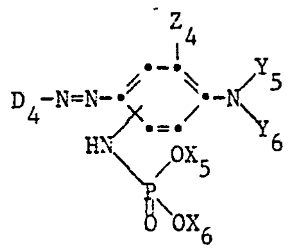

wherein

$X_5$ and $X_6$ independently of one another are alkyl having 1 to 12 carbon atoms, which is unsubstituted or substituted by hydroxyl, methoxy, ethoxy, cyano, fluorine, chlorine or bromine, or it is phenyl or benzyl,

$Y_5$ is hydrogen, or alkyl having 1 to 5 carbon atoms, which is unsubstituted or substituted by alkoxy having 1 to 4 carbon atoms,

$Y_6$ is hydrogen, alkyl having 1 to 8 carbon atoms, which is unsubstituted or substituted by methoxy, phenyl, hydroxyl, fluorine, chlorine, bromine, carbalkoxy having 2 to 6 carbon atoms or acyloxy having 2 to 7 carbon atoms or cyano, or aryl substituted by alkyl or alkoxy each having 1 to 5 carbon atoms or chlorine, or together with $Y_5$ stands for the atoms required to complete a saturated 5-membered ring, which is unsubstituted or substituted by carbalkoxy having 2 to 5 carbon atoms,

$Z_4$ is hydrogen, alkyl or alkoxy each having 1 to 4 carbon atoms, alkoxy having 1 or 2 carbon atoms, which is unsubstituted or substituted by methoxy or ethoxy, or is chlorine, bromine or cyano, carbalkoxy having 2 to 5 carbon atoms, or together with $Y_5$ stands for the atoms required to form a methyl-substituted, saturated 6-membered ring which can contain an oxygen atom as further hetero atom,

$D_4$ is thiadiazolyl which is unsubstituted or substituted by chlorine or phenyl, imidazolyl which is unsubstituted or substituted by cyano, and in which at least one of the nitrogen atoms can be substituted by $-C_2H_4OC_6H_5$, or is benzthiazolyl or benzisothiazolyl which can both be substituted by nitro groups, or is thienyl which can be substituted by methyl and/or carbethoxy groups, or is phenyl which is unsubstituted or substituted by alkyl or alkoxy each having 1 to 4 carbon atoms, cycloalkyl having 5 or 6 carbon atoms, phenyl, halogen, trifluoromethyl, cyano, nitro, (carboxylic acid-) acyl, acetyl, benzoyl, carbaloxy having 2 to 5 carbon atoms, carbalkoxyethoxy having 1 to 4 carbon atoms in the alkoxy moiety, alkylsulfone having 1 to 5 carbon atoms, phenylsulfone, N-alkyl- or N,N-dialkyl-substituted sulfonamido having 1 to 4 carbon atoms in each alkyl moiety, and the alkyl moiety can be substituted by methoxy, or alkenyl having 2 to 4 carbon atoms, which is unsubstituted or substituted by cyano and/or carbethoxy.

2. Azo dyes according to Claim 1, characterised in that they correspond to the formula

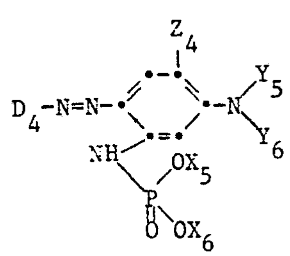

wherein $X_5$, $X_6$, $Y_5$, $Y_6$, $Z_4$ and $D_4$ have the meanings defined in Claim 1.

3. Azo dyes according to Claim 2, characterised in that they correspond to the formula

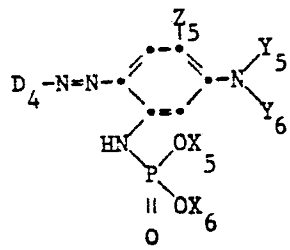

wherein

$Z_5$ is hydrogen, alkyl or alkoxy each having 1 to 4 carbon atoms, $-OC_2H_4OCH_3$, or together with $Y_5$ stands for the atoms required to form a saturated 6-membered ring which can contain an oxygen atom as further hetero atom, and

$X_5$, $X_6$, $Y_5$, $Y_6$ and $D_4$ have the meanings defined in Claim 2.

4. Azo dyes according to Claim 3, characterised in that they correspond to the formula

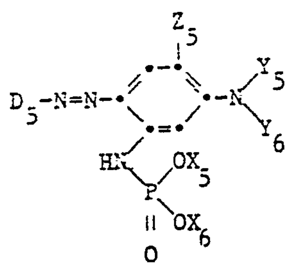

wherein

$D_5$ is phenyl which is unsubstituted or substituted by alkyl or alkoxy each having 1 to 4 carbon atoms, cycloalkyl having 5 or 6 carbon atoms, phenyl, halogen, trifluoromethyl, cyano, nitro, (carboxylic acid-) acyl, acetyl, benzoyl, carbalkoxy having 2 to 5 carbon atoms, carbalkoxyethoxy having 1 to 4 carbon atoms in the alkoxy moiety, alkylsulfone having 1 to 5 carbon atoms, phenylsulfone, N-alkyl- or N,N-dialkyl-substituted sulfonamido having 1 to 4 carbon atoms in each alkyl moiety, and the alkyl moiety can be substituted by methoxy, or alkenyl having 2 to 4 carbon atoms, which is unsubstituted or substituted by cyano and/or carbethoxy, and

$X_5$, $X_6$, $Y_5$, $Y_6$ and $Z_5$ have the meanings defined in Claim 3.

5. Azo dyes according to Claim 4, characterised in that they correspond to the formula

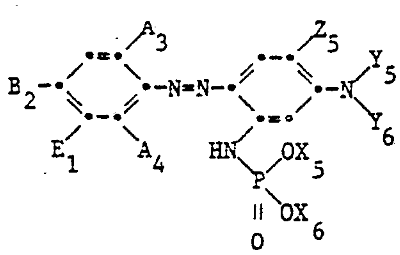

wherein

$A_3$ and $A_4$ independently of one another are hydrogen, alkyl having 1 to 4 carbon atoms, carbalkoxy having 2 to 5 carbon atoms, carbalkoxyethoxy having 1 to 4 carbon atoms in the alkoxy moiety, trifluoromethyl, cyano, nitro, alkylsulfone having 1 to 5 carbon atoms, or halogen,

$B_2$ is hydrogen, alkyl having 1 to 4 carbon atoms, which can be substituted by electronegative groups, or is alkoxy having 1 or 2 carbon atoms, alkenyl having 2 to 4 carbon atoms, which can be substituted by electronegative groups, or is $T_2-CO-$, in which $T_2$ is methyl or phenyl, or $B_2$ is carbalkoxy having 2 to 5 carbon atoms, alkylsulfone having 1 to 6 carbon atoms, phenylsulfone, N-alkyl-substituted or N,N-dialkyl-substituted sulfonamido having 1 or 2 carbon atoms in each alkyl moiety, and each alkyl moiety can be substituted by methoxy, or is cyano, nitro or halogen,

$E_1$ is hydrogen, alkyl having 1 to 4 carbon atoms, an electronegative group, or together with $B_2$ stands for the atoms required to form a saturated 5- or 6-membered ring or a cyclic imide, wherein the nitrogen atom can be substituted by alkoxyalkyl, wherein the alkoxy and alkyl moiety each contain 1 to 4 carbon atoms, and

$X_5$, $X_6$, $Y_5$, $Y_6$ and $Z_5$ have the meanings defined in Claim 4.

6. Azo dyes according to Claim 5, characterised in that they correspond to the formula

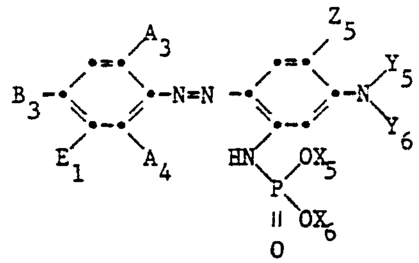

wherein

$B_3$ is hydrogen, alkyl having 1 to 4 carbon atoms, which is unsubstituted or substituted by cyano and/or carbethoxy, alkenyl having 2 to 4 carbon atoms, which is unsubstituted or substituted by cyano and/or carbethoxy, or is acetyl, benzoyl, cyano, nitro, halogen, alkylsulfone having 1 to 6 carbon atoms, or N-alkyl-substituted or N,N-dialkyl-substituted sulfonamide having 1 or 2 carbon atoms in each alkyl moiety, and

$X_5$, $X_6$, $Y_5$, $Y_6$, $Z_5$, $A_3$, $A_4$ and $E_1$ have the meanings defined in Claim 5.

7. A process for producing azo dyes of the formula

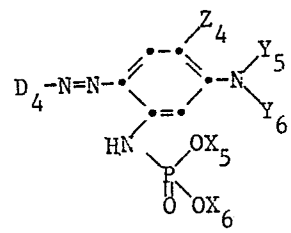

wherein

$X_5$ and $X_6$ independently of one another are alkyl having 1 to 12 carbon atoms, which is unsubstituted or substituted by hydroxyl, methoxy, ethoxy, cyano, fluorine, chlorine or bromine, or are phenyl or benzyl,

$Y_5$ is hydrogen, or alkyl having 1 to 5 carbon atoms, which is unsubstituted or substituted by alkoxy having 1 to 4 carbon atoms,

$Y_6$ is hydrogen, alkyl having 1 to 8 carbon atoms, which is unsubstituted or substituted by methoxy, phenyl, hydroxyl, fluorine, chlorine, bromine, carbalkoxy having 2 to 6 carbon atoms or acyloxy having 2 to 7 carbon atoms or cyano, or aryl substituted by alkyl or alkoxy each having 1 to 5 carbon atoms or chlorine, or together with $Y_5$ stands for the atoms required to complete a saturated 5-membered ring, which is unsubstituted or substituted by carbalkoxy having 2 to 5 carbon atoms,

$Z_4$ is hydrogen, alkyl or alkoxy each having 1 to 4 carbon atoms, alkoxy having 1 or 2 carbon atoms, which is unsubstituted or substituted by methoxy or ethoxy, or is chlorine, bromine or cyano, carbalkoxy having 2 to 5 carbon atoms, or together with $Y_5$ stands for the atoms required to form a methyl-substituted, saturated 6-membered ring which can contain an oxygen atom as further hetero atom,

$D_4$ is thiadiazolyl which is unsubstituted or substituted by chlorine or phenyl, imidazolyl which is unsubstituted or substituted by cyano, and in which at least one of the nitrogen atoms can be substituted by $-C_2H_4OC_6H_5$, or is benzthiazolyl or benzisothiazolyl which can both be substituted by nitro groups, or is thienyl which can be substituted by methyl and/or carbethoxy groups, or is phenyl which is unsubstituted or substituted by alkyl or alkoxy each having 1 to 4 carbon atoms, cycloalkyl having 5 or 6 carbon atoms, phenyl, halogen, trifluoromethyl, cyano, nitro, (carboxylic acid-) acyl, acetyl, benzoyl, carbalkoxy having 2 to 5 carbon atoms, carbalkosyethoxy having 1 to 4 carbon atoms in the alkoxy moiety, alkylsulfone having 1 to 5 carbon atoms, phenylsulfone, N-alkyl- or N,N-dialkyl-substituted sulfonamido having 1 to 4 carbon atoms in each alkyl moiety, and the alkyl moiety can be substituted by methoxy, or alkenyl having 2 to 4 carbon atoms, which is unsubstituted or substituted by cyano and/or carbethoxy, characterised in that a diazo compound of the formula

$$D_4—N_2^{\oplus}X^{\ominus},$$

in which $D_4$ has the meaning defined above and $X^{\ominus}$ is an anion, is coupled with a compound of the formula

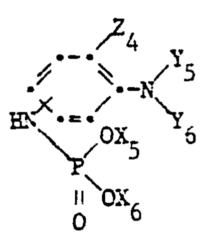

in which $X_5$, $X_6$, $Y_5$, $Y_6$ and $Z_4$ have the meanings defined above.

8. Use of the azo dyes according to any one of Claims 1 to 6 as a component of a photographic material.

9. Process for the preparation of photographic material, characterised in that a dye according to Claim 1 is incorporated into at least one layer of the photographic material.

10. Use of the photographic material prepared according to Claim 9 for the production of photographic images.

## Revendications

1. Colorants azoïques, caractérisés par le fait qu'ils correspondent à la formule

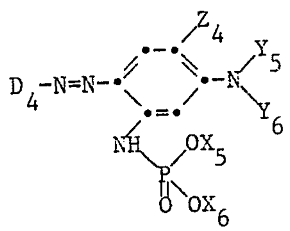

dans laquelle

$X_5$ et $X_6$, indépendamment l'un de l'autre, sont des restes alkyle ayant 1 à 12 atomes de carbone, éventuellement substitués par des radicaux hydroxyle, méthoxy, éthoxy, cyano, fluoro, chloro ou bromo ou bien des restes phényle ou des restes benzyle,

$Y_5$ est de l'hydrogène ou un reste alkyle ayant 1 à 5 atomes de carbone, éventuellement substitué par des radicaux alcoxy ayant 1 à 4 atomes de carbone,

$Y_6$ est de l'hydrogène, un reste alkyle ayant 1 à 8 atomes de carbone, éventuellement substitué par des radicaux méthoxy, phényle, hydroxyle, fluoro, chloro, bromo, carbalcoxy ayant 2 à 6 atomes de carbone ou acyloxy ayant 2 à 7 atomes de carbone ou cyano ou un reste aryle substitué par des radicaux alkyle ou alcoxy ayant chacun 1 à 5 atomes de carbone ou du chlore, ou bien $Y_6$ conjointement avec $Y_5$ représente les atomes nécessaires pour compléter un noyau à 5 chaînons, saturé, éventuellement substitué par un radical carbalcoxy ayant 2 à 5 atomes de carbone,

$Z_4$ est de l'hydrogène, un reste alkyle ou alcoxy ayant chacun 1 à 4 atomes de carbone, un reste alcoxy ayant 1 ou 2 atomes de carbone, éventuellement substitué par des radicaux méthoxy, ou éthoxy, du chlore, du brome, ou un reste cyano, carbalcoxy ayant 2 à 5 atomes de carbone ou bien désigne ceux des atomes pour former avec $Y_5$ un noyau à 6 chaînons, saturé, méthylé, contenant éventuellement un atome d'oxygène comme autre hétéro-atome,

$D_4$ est un reste thiadiazolyle éventuellement substitué par du chlore ou un radical phényle, un reste imidazolyle éventuellement substitué par un radical cyano, où au moins un des atomes d'azote est éventuellement substitué par $—C_2H_4OC_6H_5$ ; un reste benzothiazolyle ou benzisothiazolyle éventuellement substitué par des groupes nitro, ou bien un reste thiényle éventuellement substitué par des radicaux méthyle et/ou carbéthoxy, ou bien un reste phényle éventuellement substitué par des radicaux alkyle ou alcoxy ayant chacun 1 à 4 atomes de carbone, cycloalkyle ayant 5 ou 6 atomes de carbone, phényle, halogéno, trifluorométhyle, cyano, nitro, (acide carboxylique) acyle, acétyle, benzoyle, carbalcoxy ayant 2 à 5 atomes de carbone, carbalcoxyéthoxy ayant 1 à 4 atomes de carbone dans la partie alcoxy, alkylsulfonyle ayant 1 à 5 atomes de carbone, phénylsulfonyle, sulfamido-N-alkylé ou N,N-dialkylé, avec pour chaque partie alkyle 1 à 4 atomes de carbone, les parties alkyle étant éventuellement substituées par le groupe méthoxy, ou bien un reste phényle éventuellement substitué par un radical alcényle ayant 2 à 4 atomes de carbone, lui-même étant éventuellement substitué par des groupes cyano et/ou carbéthoxy.

2. Colorants azoïques selon la revendication 1, caractérisés par le fait qu'ils correspondent à la formule

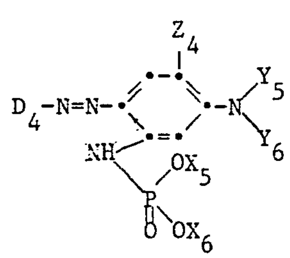

dans laquelle $X_5$, $X_6$, $Y_5$, $Y_6$, $Z_4$ et $D_4$ ont les significations données dans la revendication 1.

3. Colorants azoïques selon la revendication 2, caractérisés par le fait qu'ils correspondent à la formule

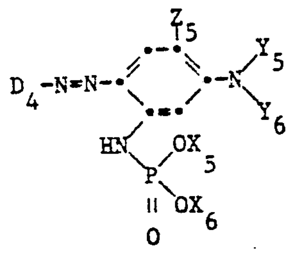

dans laquelle

$Z_5$ est de l'hydrogène, un reste alkyle ou alcoxy ayant chacun 1 à 4 atomes de carbone, $-OC_2H_4OCH_3$, ou désigne ceux des atomes pour former conjointement avec $Y_5$ un noyau à 6 chaînons, saturé, contenant éventuellement 1 atome d'oxygène comme autre hétéro-atome, et

$X_5$, $X_6$, $Y_5$, $Y_6$ et $D_4$ ont les significations données dans la revendication 2.

4. Colorants azoïques selon la revendication 3, caractérisés par le fait qu'ils correspondent à la formule

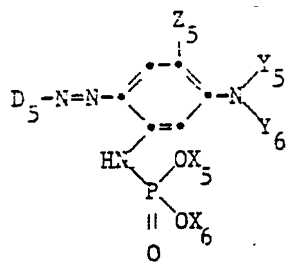

dans laquelle

$D_5$ est un groupe phényle éventuellement substitué par des radicaux alkyle ou alcoxy ayant chacun 1 à 4 atomes de carbone, cycloalkyle ayant 5 ou 6 atomes de carbone, phényle, halogéno, trifluorométhyle, cyano, nitro, (acide carboxylique) acyle, acétyle, benzoyle, carbalcoxy ayant 2 à 5 atomes de carbone, carbalcoxyéthoxy ayant 1 à 4 atomes de carbone dans la partie alcoxy, alkylsulfonyle ayant 1 à 5 atomes de carbone, phénylsulfonyle, sulfamido N-alkylé ou N,N-dialkylé, avec dans chaque partie alkyle, 1 à 4 atomes de carbone, la partie alkyle étant éventuellement substituée par le groupe méthoxy, ou bien un reste phényle éventuellement substitué par un radical alcényle ayant 2 à 4 atomes de carbone, lui-même éventuellement substitué par des groupes cyano et/ou carbéthoxy, et

$X_5$, $X_6$, $Y_5$, $Y_6$ et $Z_5$ ont les significations données dans la revendication 3.

5. Colorants azoïques selon la revendication 4, caractérisés par le fait qu'ils correspondent à la formule

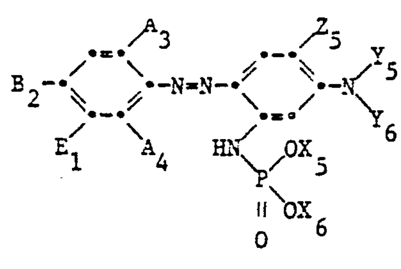

dans laquelle

$A_3$ et $A_4$, indépendamment l'un de l'autre sont de l'hydrogène, des groupes alkyle ayant 1 à 4 atomes de carbone, carbalcoxy ayant 2 à 5 atomes de carbone, carbalcoxyéthoxy ayant 1 à 4 atomes de carbone dans la partie alcoxy, trifluorométhyle, cyano, nitro, alkylsulfonyle ayant 1 à 5 atomes de carbone ou halogéno,

$B_2$ est de l'hydrogène, un reste alkyle ayant 1 à 4 atomes de carbone, éventuellement substitué par des groupes électronégatifs, alcoxy ayant 1 ou 2 atomes de carbone, un reste alcényle ayant 2 à 4 atomes de carbone, éventuellement substitué par des groupes électro-négatifs, un reste $T_2$-CO où $T_2$ est un radical méthyle ou phényle, un reste carbalcoxy ayant 2 à 5 atomes de carbone, alkylsulfonyle ayant 1 à 6 atomes de carbone, phénylsulfonyle, sulfamido N-alkylé ou N,N-dialkylé, ayant dans chaque partie alkyle 1 ou 2 atomes de carbone, la partie alkyle étant éventuellement substitué par le groupe méthoxy, un reste cyano, nitro ou halogéno,

$E_1$ représente de l'hydrogène, un reste alkyle ayant 1 à 4 atomes de carbone, un groupe électronégatif, ou ceux des atomes pour former conjointement avec $B_2$ un noyau à 5 ou 6 chaînons, saturé, ou bien un imide cyclique, où l'atome d'azote est éventuellement substitué par un groupe alcoxy-alkyle, dans lequel la partie alcoxy et la partie alkyle contiennent chacune 1 à 4 atomes de carbone, et

$X_5$, $X_6$, $Y_5$, $Y_6$ et $Z_5$ ont les significations données dans la revendication 4.

6. Colorants azoïques selon la revendication 5, caractérisés par le fait qu'ils correspondent à la formule

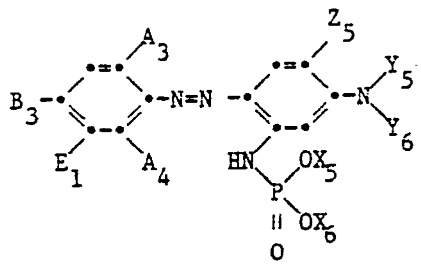

dans laquelle

$B_3$ est de l'hydrogène, un reste alkyle ayant 1 à 4 atomes de carbone, éventuellement substitué par des radicaux cyano et/ou carbéthoxy, un reste alcényle ayant 2 à 4 atomes de carbone éventuellement substitué par des radicaux cyano et/ou carbéthoxy, un reste acétyle, benzoyle, cyano, nitro, halogéno, alkylsulfonyle ayant 1 à 6 atomes de carbone ou sulfamido N-alkylé ou N,N-dialkylé ayant dans chaque partie alkyle 1 ou 2 atomes de carbone, et

$X_5$, $X_6$, $Y_5$, $Y_6$, $Z_5$, $A_3$, $A_4$ et $E_1$ ont les significations données dans la revendication 5.

7. Procédé pour la préparation de colorants azoïques ayant la formule

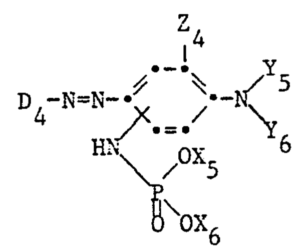

dans laquelle

$X_5$ et $X_6$, indépendamment l'un de l'autre, sont des restes alkyle ayant 1 à 12 atomes de carbone, éventuellement substitués par des radicaux hydroxyle, méthoxy, éthoxy, cyano, fluoro, chloro ou bromo, ou des restes phényle ou benzyle, $Y_5$ est de l'hydrogène ou un reste alkyle ayant 1 à 5 atomes de carbone, éventuellement substitué par des radicaux alcoxy ayant 1 à 4 atomes de carbone,

$Y_6$ est de l'hydrogène, un reste alkyle ayant 1 à 8 atomes de carbone, éventuellement substitué par des radicaux méthoxy, phényle, hydroxyle, fluoro, bromo, chloro, carbalcoxy ayant 2 à 6 atomes de carbone, ou acyloxy ayant 2 à 7 atomes de carbone ou cyano, ou bien un reste aryle substitué par des radicaux alkyle ou alcoxy ayant chacun 1 à 5 atomes de carbone ou du chlore, ou bien représente avec $Y_5$ les atomes nécessaires pour compléter un noyau à 5 chaînons, saturé, éventuellement substitué par un radical carbalcoxy ayant 2 à 5 atomes de carbone,

$Z_4$ est de l'hydrogène, un reste alkyle ou alcoxy ayant chacun 1 à 4 atomes de carbone, un reste alcoxy ayant 1 ou 2 atomes de carbone, éventuellement substitué par des radicaux méthoxy ou éthoxy, du chlore, du brome ou un reste cyano, carbalcoxy avec 2 à 5 atomes de carbone ou désigne ceux des atomes pour former conjointement avec $Y_5$, un noyau à 6 chaînons, saturé, méthylé, contenant éventuellement un atome d'oxygène comme autre hétéro-atome,

$D_4$ est un reste thiadiazolyle éventuellement substitué par du chlore ou un radical phényle, un reste imidazolyle éventuellement substitué par un radical cyano, où au moins un des atomes d'azote est éventuellement substitué par $-C_2H_4OC_6H_5$ ; un reste benzothiazolyle ou benzisothiazolyle éventuellement substitué par des groupes nitro, ou bien un reste thiényle éventuellement substitué par des groupes méthyle et/ou carbéthoxy, ou bien un reste phényle éventuellement substitué par des radicaux alkyle ou alcoxy ayant chacun 1 à 4 atomes de carbone, cycloalkyle ayant 5 ou 6 atomes de carbone, phényle, halogéno, trifluorométhyle, cyano, nitro, (acide carboxylique) acyle, acétyle, benzoyle, carbalcoxy ayant 2 à 5 atomes de carbone, carbalcoxyéthoxy ayant 1 à 4 atomes de carbone dans la partie alcoxy, alkylsulfonyle ayant 1 à 5 atomes de carbone, phénylsulfonyle, sulfamido N-alkylé ou N,N-dialkylé ayant dans chaque partie alkyle 1 à 4 atomes de carbone, les parties alkyle étant éventuellement substituées par le groupe méthoxy, ou bien un reste phényle éventuellement substitué par un radical alcényle ayant 2 à 4 atomes de carbone, lui-même étant éventuellement substitué par des groupes cyano et/ou carbéthoxy, caractérisé par le fait qu'on copule un composé diazoté ayant la formule

$$D_4—N_2^{\oplus}X^{\ominus},$$

dans laquelle $D_4$ a les significations données ci-dessus et $X^{\ominus}$ est un anion, avec un composé de formule

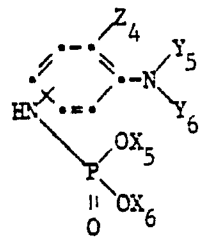

dans laquelle $X_5$, $X_6$, $Y_5$, $Y_6$ et $Z_4$ ont les significations données ci-dessus.

8. Utilisation des colorants azoïques selon l'une des revendications 1 à 6, comme constituants d'un matériau photographique.

9. Procédé pour la préparation de matériaux photographiques, caractérisé par le fait qu'on incorpore dans au moins une couche, un colorant selon la revendication 1.

10. Utilisation du matériau photographique préparé selon la revendication 9, pour fabriquer des images photographiques.